# EUROPÄISCHE PATENTSCHRIFT

(11) **EP 3 317 078 B1**
(45) Veröffentlichungstag und Bekanntmachung des Hinweises auf die Patenterteilung: **09.11.2022**
(21) Anmeldenummer: 16732225.4
(22) Anmeldetag: 16.06.2016
(51) Int. Cl.: B29C 48/68, B29C 48/44, B29C 48/25, B29C 48/92, B29C 48/82

(54) **VERFAHREN ZUR VERARBEITUNG VON PRODUKTEN IM EXTRUDER**
METHOD FOR PROCESSING PRODUCTS IN THE EXTRUDER
PROCÉDÉ DE TRAITEMENT DE PRODUITS DANS UNE EXTRUDEUSE

(30) Priorität: 02.07.2015 DE 102015008406
(43) Veröffentlichungstag der Anmeldung: 09.05.2018
(73) Patentinhaber: Entex Rust & Mitschke GmbH, 44805 Bochum (DE)
(72) Erfinder: RUST, Harald, 44805 Bochum (DE)
(74) Vertreter: Kaewert, Klaus
(86) Internationale Anmeldenummer: PCT/EP2016/001014
(87) Internationale Veröffentlichungsnummer: WO 2017/001048

(56) Entgegenhaltungen:
- WO-A1-98/33858
- DE-A1- 10 355 748
- DE-A1- 19 939 075
- DE-A1-102008 018 686
- DE-A1-102009 013 839
- DE-A1-102010 030 706
- DE-U1-202011 104 061
- DE-U1-202011 104 061
- JP-A- H11 198 214
- JP-A- H11 216 765
- US-A- 6 074 084
- MICHAEL W BATTON ET AL: "An introduction of the planetary roller extruder and areas of applications rubber devulcanization", ANTEC 2015 - PROCEEDINGS OF THE TECHNICAL CONFERENCE & EXHIBITION, ORLANDO, FLORIDA, USA MARCH 23-25, 2015,, 1. März 2015 (2015-03-01), XP009191170,

## Beschreibung

Die Erfindung betrifft ein Verfahren zur Verarbeitung von Elastomeren, insbesondere PSA (Pressure-Sensivitive Adhesives)-Klebern aus Elastomeren, vgl. "pressure sensitive adhesives and applications" Istvan Benedek, Auflage 2004, Seite 161ff,. Die häufigsten verwendeten Elastomere sind Kautschuke. Es werden aber auch Styrol-Butadien-Polymere oder Acryl-Polymere verwendet. Solche Produkte müssen zunächst plastifiziert werden, bevor eine Vermischung mit anderen Materialien erfolgen kann.

Zur Plastifizierung dieser Elastomere ist es bekannt, diese Elastomere mechanisch und/oder chemisch zu bearbeiten. Die Elastomere haben je nach Herkunft und Basis eine andere Beschaffenheit. Je höher das Molekulargewicht ist, desto schwieriger wird die Plastifizierung der Elastomere.

Die Plastifizierung ist erforderlich um eine Einmischung von Zuschlagstoffen zu ermöglichen, auch um die Elastomere durch eine Düse austragen zu können.

Zur Plastifizierung sind in der Vergangenheit Kneter verwendet worden. Mit Knetern wird das Molekulargewicht der Elastomere durch starke mechanische Verformung unter Anwesenheit von Sauerstoff und unter starker Erwärmung stark reduziert. Allerdings werden die Eigenschaften der Elastomere durch die Verringerung des Molekulargewichtes stark verändert und eine Kleberherstellung dadurch immer schwieriger.

Außerdem arbeiten die Kneter nur batchweise. Die Kneter besitzen ein Gehäuse mit einem oder mehreren darin bewegten Knetarmen. Um einen kontinuierlichen Materialfluß mit Knetern zu schaffen, sind mehrere Kneter erforderlich, die in kontinuierlicher Folge plastifizierte Elastomere zur Verfügung stellen.

Die Plastifizierung kann durch chemische Mittel unterstützt werden. Die chemischen Mittel sind in der Regel nach der Plastifizierung unerwünscht. Ihre Trennung und Entfernung aus der entstandenen Masse ist aufwendig und schwierig. Häufig verbleiben die chemischen Mittel teilweise in der Masse und schädigen deren Qualität.

In neuerer Zeit haben sich Planetwalzenextruder für die mechanische Bearbeitung empfohlen. Der Planetwalzenextruder verursacht eine ungleich schonendere Behandlung der Elastomere als ein Kneter oder herkömmliche Walzen.

Im Kneter und an herkömmlichen Walzen läßt sich die Temperatur längst nicht so gut kontrollieren wie im Planetwalzenextruder.

Im Kneter und an herkömmlichen Walzen hat die Umgebungsluft ungehinderten Zutritt, so daß aufgebrochene Molekülstrukturen in erheblichem Umfang mit dem Luftsauerstoff eine Verbindung eingehen können, was bei der weiteren Bearbeitung der Elastomere von erheblichem Nachteil sein kann.

Außerdem ist ein Planetwalzenextruder natürlich auf einen kontinuierlichen Betrieb angelegt, so daß ein Parallelbetrieb mit einer Vielzahl von Knetern zur Herstellung eines kontinuierlichen Materialflusses entfällt.

Ein Planetwalzenextruder besitzt eine Zentralspindel, ein innen verzahntes Gehäuse und zwischen Gehäuseinnenverzahnung und der Zentralspindel verschiedene Planetspindeln. Die Planetspindeln kämmen sowohl mit der Zentralspindel als auch mit dem innen verzahnten Extrudergehäuse. Die Planetspindeln laufen dabei um die Zentralspindel um. Das Gehäuse besitzt innen eine dünne Buchse, die innen mit der Verzahnung versehen ist und außen gekühlt oder beheizt wird. Dazu wird das Temperierungsmittel außen an der Buchse entlang geführt. Darüber hinaus kann die Zentralspindel mit einer Temperierung versehen werden.

Mit der Art und Anzahl der Planetspindeln kann in erheblichem Umfang auf die Aufbereitung der Elastomere und auf deren Vermischung mit anderen Stoffen Einfluß genommen werden.

Wegen der Einzelheiten und Variationen bekannter Planetwalzenextruder bzw. Abschnitten/Modulen wird Bezug genommen auf folgende Druckschriften: DE 102005007952A1, DE102004061068A1, DE102004038875A1, DE102004048794A1, DE102004048773A1, DE102004048440A1, DE102004046228A1, DE102004044086A1, DE102004044085A1, DE102004038774A1, DE102004034039A1, DE102004032694A1, DE102004026799B4, DE102004023085A1, DE102004004230A1, DE102004002159A1, DE19962886A1, DE19962883A1, DE19962859A1, DE19960494A1, DE19958398A1, DE19956803A1, DE19956802A1, DE19953796A1, DE19953793A1.

Zum Teil sind in den Druckschriften Entgasungsvorgänge beschrieben. Mit der Entgasung wird das im Extruder eingeschlossene Material ganz oder teilweise von unerwünschtem Gas befreit.

Andere Entgasungsvorgänge sind in folgenden Druckschriften beschrieben: DE102004061185A1, DE102004060966A1, DE102004053929A1, DE1020040050058A1, DE102004004237A1, DE69908565T2, DE69827497T2, DE69807708T2, DE69725985T2, DE69715781T2, DE69715082T2, DE69711597T2, DE69710878T2, DE69709015T2, DE69707763T2, DE69630762T2, DE69628188T2, DE69622375T2, DE69428309T2, DE69427539T2, DE69419146T2, DE69312852T2, DE69312246T2, DE69306874T2, DE69207369T2, DE68928567T2, DE68915788T3, DE60206271T2, DE60012108T2, DE19956483A1, DE19954313A1, DE10257377A1, DE10356821A1, DE10354546A1, DE10354379A1, DE10352444A1, DE10352440A1, DE10352439A1, DE10352432A1, DE10352431A1, DE10352430A1, DE10351463A1, DE10349144A1, DE10345043A1, DE10343964A1, DE10342822A1, DE10340977B4, DE10340976B4, DE10333927A1.

Für eine kontinuierliche Verarbeitung im Extruder kann ein einziger Extruder ausreichend sein. Vorteilhafterweise erlaubt die zeitgemäße Modulbauweise eine Hintereinanderschaltung mehrerer gleicher oder unterschiedlicher Module, um damit die gewünschte Materialbearbeitung im Extruder darzustellen.

Ein wesentlicher Bestandteil der Materialbearbeitung ist bei den hier relevanten Materialien die mechanische Bearbeitung. Dabei wird das Material zwischen den ineinander wälzenden Zähnen des Planetwalzenextruders vielfach ausgewalzt. Die Vielzahl der Wälzvorgänge ergibt sich aus der Umdrehungszahl der Zentralspindel und den daraus abzuleitenden Drehzahlen der Planetspindeln. Entsprechend der Verzahnung wird das Material dabei sehr dünn ausgewalzt. Das bewirkt eine intensive Knetung des Materials. Durch diese Knetung wird festes Material wie zum Beispiel Kautschuk, welches dem Planetwalzenextruder in Partikelform zugeführt wird, plastifiziert.

Die Erfindung hat sich die Aufgabe gestellt, die Aufbereitung von Kautschuk und vergleichbaren anderen Materialien zu verbessern. Das wird mit den Merkmalen des Hauptanspruches erreicht. Die Unteransprüche beschreiben bevorzugte Ausführungsformen.

Dabei geht die Erfindung von folgender Erkenntnis aus:
Die Plastifizierung kann unter Anwesenheit von Sauerstoff oder unter Ausschluß von Sauerstoff erfolgen. Der Ausschluß von Sauerstoff wird mittels eines Schutzgases wie zum Beispiel Stickstoff oder Kohlendioxid erreicht, mit dem der Sauerstoff ausgeschlossen wird.
Die Anwesenheit von Sauerstoff ergibt sich schon dann, wenn das Material mit Umgebungsluft in den Extruder eingetragen wird, weil die Umgebungsluft neben anderen Stoffen auch Sauerstoff enthält.

Die Anwesenheit von Sauerstoff kann noch durch Zudosierung von Sauerstoff gesteigert werden.

Es kann auch eine begrenzter Zutritt von Sauerstoff durch entsprechend geringe Zudosierung von Schutzgas erreicht werden.

Der Sauerstoff lagert sich im Falle eines mit der Plastifizierung verbundenen Molekülabbaus teilweise an den Atomen an und beeinflußt so die Materialeigenschaften und bei Bedarf auch die nachfolgende Materialverarbeitung/Materialbearbeitung. Das gilt auch für eine Vernetzung der Moleküle nach einem Austritt aus dem Extruder. Die Moleküle mit Atomen, an denen Sauerstoffatome anliegen, vernetzen sich nur noch in entsprechend geringerem Umfang mit anderen Molekülen.

Soweit im Folgenden Kautschuke angesprochen sind, so sind damit natürliche Kautschuke gemeint. Die synthetischen Kautschuke werden im Folgenden der Gruppe der anderen Elastomere zugerechnet, wobei synthetische Elastomere mit Eigenschaften hergestellt werden können, die den (natürlichen) Kautschuken vergleichbar sind bzw. in anderer Herstellung nicht mit (natürlichem) Kautschuk vergleichbar sind.

Natürliche, nicht thermoplastische Elastomere. Sie kommen in unterschiedlicher Beschaffenheit vor,
- mit mittlerem Molekulargewichten von kleiner/gleich 1.000.000
- mit mittlerem Molekulargewichten von größer 1.000.000 bis zu 2.000.000
- mit mittlerem Molekulargewichten von größer 2.000.000

Je geringer das Ausgangsmolekulargewicht von Kautschuk ist, desto teurer ist der Kautschuk bzw. ein vergleichbares synthetisches Elastomer.

Zugleich ist zu berücksichtigen, daß für die verschiedenen Anwendungen von Kautschuk und vergleichbaren Elastomeren unterschiedliche Qualitätsanforderungen gelten. In der Anwendung für Kleber wird zwischen Klebern des täglichen Lebens und hochwertigen Klebern unterschieden.

Zu den Klebern des täglichen Lebens gehören zum Beispiel Klebebänder für Verpackungen, die nach Gebrauch mit der Verpackung entsorgt werden.

Für solche Anwendung finden vorzugsweise billige Kautschuke mit hohen Molekulargewichten bzw. billige vergleichbare Elastomere Anwendung. Die Plastifizierung solcher Elastomere zur Einarbeitung von anderen Kleberbestandteilen würde bei vergleichbarer Handhabung viel mehr Aufwand verursachen. Man hilft sich dabei mit
- heftiger mechanischer Verformung ohne Rücksicht auf den Molekularabbau
- mit einer Verarbeitung mindestens unter Verarbeitung unter Umgebungsluft, gegebenenfalls auch mit der Zuführung weiteren Sauerstoffs, ohne Rücksicht darauf, in welchem Umfang noch eine anschließende Vernetzung möglich ist
- Belastung der Elastomere mit wesentlicher Erwärmung ohne Rücksicht auf die Folgen für den Molekularabbau
- chemischen Plastifizierungshilfsmitteln, insbesondere mit Lösungsmitteln.

Plastifizierungshilfsmittel wie Lösungsmittel lassen sich nach dem Einmischen aller Kleberbestandteile nicht mehr 100%ig aus der Mischung entfernen. Die Entfernung erfolgt üblicherweise durch Entgasen. Die in der Masse verbleibenden Lösungsmittel lassen nur einen Kleber geringer Qualität entstehen, der aber noch in einfachen Anwendungen wie bspw. für Verpackungen sinnvoll ist.

Zu den hochwertigen Klebern gehören zum Beispiel Klebebänder mit warmfestem Kleber und auch Klebebänder mit Kleber, die sich rückstandsfrei von einem Gegenstand lösen lassen. Die Erfindung hat erkannt, daß bei solchen hochwertigen Klebern eine lösungsmittelfreie Herstellung eine wichtige Voraussetzung ist. Das gilt auch für andere chemischen Hilfsmittel, welche die Eigenschaften von Kautschuk bzw. vergleichbarer Elastomere negativ beeinflussen. Das gilt auch für die Plastifizierung in Anwesenheit von Sauerstoff und eine damit verbundene teilweise Oxidation.

Die DE 19939075A1 offenbart ein Verfahren zum Recyclen von Altreifen. Dabei werden Kautschuk und andere nicht thermoplastische Elastomere im Extruder plastifiziert. Der Extruder besteht aus Planetwalzenextruderabschnitten/Modulen und besitzt ein vorgeschaltetes Füllteil. Dabei besitzen die Planetwalzenextruderabschnitte
- eine außen verzahnte Zentralspindel
- auf der Zentralspindel umlaufende außen verzahnte Planetspindeln
- ein umgebendes, innen verzahntes Gehäuse
- und kämmen die Planetspindeln zugleich mit der Zentralspindel und der Innenverzahnung des umgebenden Gehäuses
- und ist die Verzahnung eine Schrägverzahnung, so daß die einzelnen Zähne entsprechend der Steigung der Zähne zur Extruderlängsachse wie Schraubengänge an den verzahnten Flächen verlaufen
- und wobei das Einsatzmaterial zwischen den Zähnen des Planetwalzenextruderabschnittes geknetet wird, um eine Plastifizierung des Kautschuks und der Elastomere zu ermöglichen
- und wobei das Einsatzmaterial einer zusätzlichen Verformung in mindestens einer Ringkonstruktion unterworfen ist
- wobei eine Kühlung des Kautschuks und der anderen Elastomere erfolgt

Aufgabe der Erfindung ist nicht das Recycling von Altreifen, sondern eine Herstellung von hochwertigem Klebern mit Anteilen an natürlichem Kautschuk und vergleichbaren nicht thermoplastischen Elastomeren. Das wird mit den Merkmalen des Hauptanspruches erreicht. Die Unteransprüche beschreiben bevorzugte Ausführungsformen.

Nach der Erfindung erfolgt eine Plastifizierung von natürlichem Kautschuk im Planetwalzenextruder und mit einem Dipergierring unter Kühlung der Masse, bis sich eine Viskosität zeigt, deren Moneyzahl eine bestimmte Größenordnung hat.

Für die Anwendung dieser Technik zur Herstellung von hochwertigem Kleber wird der Kautschuk nach der Erfindung möglichst trocken in dem Planetwalzenextruder verarbeitet. Nach der Erfindung werden Harze und Öle und andere flüssige, für den Kautschuk unschädlichen Zuschläge als flüssige Gleitmittel mit einem Anteil kleiner/gleich 15 Gew%, bezogen auf die Mischung mit dem Kautschuk, vorzugsweise mit einem Anteil kleiner/gleich 13Gew%, noch weiter bevorzugt mit einem Anteil kleiner/gleich 11Gew% und höchst bevorzugt mit einem Anteil kleiner/gleich 9Gew%, bezogen auf die Mischung mit dem Kautschuk in dem Planetwalzenextruder plastifiziert. Dabei kann von Vorteil sein, wenn zunächst der Kautschuk vorgewärmt wird, bevor die Vermischung mit den vorgesehenen flüssigen Bestandteilen erfolgt. Noch weiter bevorzugt erfolgt die Vorwärmung im Füllteil, damit zugegebene, aufgeschmolzene Harze ihre Wärme nicht teilweise an den Kautschuk verlieren und dadurch ihre Gleitwirkung teilweise einbüßen.

Höchst bevorzugt wird darüber hinaus der Sauerstoff bei der Plastifizierung mindestens teilweise ausgeschlossen. Das gilt auch für die Vorwärmung im Füllteil. Die unter Schutzgas, damit nachteilige Wirkungen des Luftsauerstoffs weitgehend ausgeschlossen werden.

Günstig ist auch eine Eindosierung der gewünschten übrigen Mischungsbestandteile des Klebers nach der Plastifizierung des Kautschuks. Das hat gegenüber einer gemeinsamen Eindosierung mit dem Kautschuk den Vorteil, daß die Plastifizierung des Kautschuks nicht durch die anderen Mischungsanteile gestört werden kann.

Die Zumischung von flüssigen und schmelzflüssigen Kleberbestandteilen kann durch Eindüsen erfolgen. Die notwendigen Düsen können im Extrudermantel an der Stelle angeordnet werden, wo eine ausreichende Plastifizierung durch die erfindungsgemäße Viskositätsmessung feststellbar ist.

Die Düsen werden im einfachsten Fall durch Bohrungen gebildet, die durch den Extrudermantel/Gehäuse bis in den Extruderinnenraum ragen. Die flüssigen und schmelzflüssigen Kleberbestandteile werden über geeignete Leitungen zugeführt, die an den Extrudermantel/Gehäuse angeflanscht sind. Vorzugsweise findet eine Eindüsung der flüssigen und schmelzflüssigen Kleberbestandteile bei modularem Extruderaufbau über eine Ringkonstruktion statt, die zwischen zwei Modulen angeordnet sind. Zu den Extrudermodulen gehört regelmäßig ein Gehäuse, das an beiden Enden mit einem Flansch versehen ist. An den Flanschen werden die Gehäuse miteinander verspannt. Zwischen den Flanschen läßt sich sehr vorteilhaft ein Ring einspannen, der mit Bohrungen und/oder Nuten versehen ist, durch die flüssige und schmelzflüssige Kleberbestandteile in den Extruderinnenraum eingetragen werden. Die Zuleitung der flüssigen und schmelzflüssigen Kleberbestandteile erfolgt über Rohrleitungen oder Schlauchleitungen, die in den Zwischenraum zwischen den Gehäuseflanschen ragen und über geeignete Pumpen mit dem flüssigen und schmelzflüssigen Kleberbestandteilen beaufschlagt werden.

Vorzugsweise ist mindestens ein Seitenarmextruder für den Eintrag weiterer Mischungsanteile in den Extruder bzw. Extrudermodul vorgesehen. Solche Seitenarmextruder können zugleich genutzt werden, um zum Beispiel Harze für den Eintrag in den Extruder aufzuschmelzen. Die Seitenarmextruder können auch als Pumpe genutzt werden, um flüssige oder schmelzflüssige Mischungsanteile in den Extruder zu tragen. Insbesondere Seitenarmextruder in der Form von Doppelschneckenextrudern sind auch für den Eintrag von Feststoffen wie zum Beispiel Füllstoffen geeignet. Das gilt sowohl für Mischungen aus Feststoffen und flüssigen Stoffen wie auch für den ausschließlichen Eintrag von Feststoffen.

Seitenarmextruder werden auch als Seitenarmextruder bezeichnet, wenn sie nicht an der Extruderseite, sondern an der Extruderoberseite oder an der Unterseite angeordnet sind.

Für eine Einmischung von Füllstoffen und anderen Bestandteilen einer gewünschten Elastomermischung im Planetwalzenextruder wird der Kautschuk und werden die anderen nicht thermoplastischen Elastomere bis zu Plastifizierungsgrad mit einer Moneyzahl von kleiner 80, vorzugsweise von kleiner 70 und noch weiter bevorzugt von kleiner 60 und höchst bevorzugt von kleiner 50 hergestellt.

Dies kann ganz oder teilweise außerhalb des Planetwalzenextruders erfolgen. Das kann auch ausschließlich im Planetwalzenextruder erfolgen.

Das schließt aber auch eine teilweise Plastifizierung von Kautschuk oder dergleichen Elastomere in einem Vorverfahren nicht aus. Die teilweise Plastifizierung im Vorverfahren kann durch eine herkömmliche Plastifizierung in einem Kneter oder in einem Walzengerüst erfolgen. Vorzugsweise ist jedoch eine Vorbereitung von Kautschuk oder vergleichbarer Elastomere in einem Stiftextruder vorgesehen.

Zwar kann auch Kautschuk mit einem Molekulargewicht von mehr als 2.000.000 ausschließlich im Planetwalzenextruder plastifiziert werden, mit Plastitifizierungshilfsmitteln oder ohne Plastifizierungshilfsmitteln. Vorzugsweise wird jedoch nur ein Kautschuk bzw. vergleichbares Elastomer mit einem mittleren Molekulargewicht von bis zu 2.000.000, noch weiter bevorzugt mit einem mittleren Molekulargewicht bis 1.500.000 und höchst bevorzugt mit einem mittleren Molekulargewicht bis 1.000.000 eingesetzt.

Dabei kann es sich um einen Kautschuk oder vergleichbares Elastomer handeln, welches durch eine Vorbehandlung das gewünschte Molekulargewicht aufweist oder als Kautschuk durch entsprechende Auswahl niedrig molekularer Ausgangslatex oder durch entsprechende Gestaltung vergleichbarer synthetischer Elastomere entstanden ist.

Im Übrigen erfolgt die erfindungsgemäße Plastifizierung von Kautschuk und vergleichbarer Elastomere entsprechend den Anforderungen an die Qualität. So werden an den Kautschuk und vergleichbare Elastomere in der Anwendung auf Kleber des täglichen Lebens wesentlich geringere Anforderungen als bei der Anwendung auf hochwertige Klebergestellt. Im Fall der Herstellung von Klebern des täglichen Lebens kann die Mischung auch Lösungsmittel und andere Anteile enthalten, welche das Plastifizieren von Kautschuk zum Einmischen von Kleberbestandteilen erleichtern.

Im Fall der Herstellung hochwertiger Kleber soll insbesondere auf Lösungsmittel verzichtet werden, welche die Klebereigenschaften sonst wesentlich beeinträchtigen.

Ebenso soll bei der Herstellung hochwertiger Kleber ein Zutritt von Sauerstoff vermieden werden.

Nach der Erfindung wird darüber hinaus bei der Plastifizierung mit möglichst geringer Temperatur gearbeitet. Dem liegt die Erkenntnis zugrunde, daß zwar jeder Durchlauf durch einen Extruder, auch durch Planetwalzenextruder, zu einem Molekularabbau führt, aber daß eine ausreichende Plastifizierung mit unterschiedlichem Molekularabbau erreicht werden kann.

Nach der Erfindung wird der Molekularabbau bei der Plastifizierung im Planetwalzenextruder soweit wie möglich reduziert, so daß der verarbeitete Kautschuk bzw. die verarbeiteten Elastomere trotz Plastifizierung und Vermischung mit allen gewünschten Zuschlägen mit einem größeren Molekulargewicht aus dem Extruder als bei der Bearbeitung in anderen Extrudern austritt.

Dabei ist wichtig, daß mit einer möglichst niedrigen Massetemperatur in der Plastifizierungszone gearbeitet wird. Diese Temperatur liegt ausreichend weit unter der Temperatur, bei der ohne mechanische Verformung und ohne chemische Plastifizierungsmittel unter Zutritt von Umgebungsluft ein Molekularabbau des Naturkautschuks eintritt. Ausreichend weit ist zum Beispiel ein Temperaturabstand von mindestens 10Grad Celsius, vorzugsweise von mindestens 20 Grad Celsius, noch weiter bevorzugt von mindestens 30 Grad Celsius und höchst bevorzugt von mindestens 40 Grad Celsius.

Bezogen auf den Naturkautschuk ist das eine Temperatur von weniger als 140 Grad Celsius, vorzugsweise weniger als 130 Grad Celsius, noch weiter bevorzugt 120 Grad Celsius und weniger.

Zum Beispiel kann Naturkautschuk mit einer Massetemperatur von 100 bis 120 Grad Celsius plastifiziert werden.

Anderer Kautschuk kann mit einer anderen Temperatur verarbeitet werden, zum Beispiel synthetischer Butylkautschuk mit einer Temperatur von 160 bis 170 Grad Celsius. Diese Temperaturen liegen vergleichbar weit unter den Temperaturen, bei den auch bei Butylkautschuk ohne mechanische Verformung und ohne chemische Plastifizierungsmittel unter Zutritt von Umgebungsluft ein Molekularabbau eintritt.

Beim Fehlen von Lösungsmitteln und dergleichen Plastifizierungshilfsmitteln muß der Planetwalzenextruder mehr Plastifizierungsarbeit als bei der Herstellung von Klebern des täglichen Lebens geleistet werden. Insbesondere für solche Bearbeitungsvorgänge sind unten erläuterte Dispergierungsringe hilfreich.

Die erfindungsgemäße Plastifizierung im Planetwalzenextruder und mit einem Dispergierring und mit Kühlung kann auch auf Kleber des täglichen Lebens angewendet werden, auch auf niedrigpreisigen Kautschuk und Elastomere mit hohem Molekulargewicht. Dabei finden nach Wahl ein Molekularabbau bei höherer Temperatur und/oder ein Molekularabbau durch Plastifizierung unter Sauerstoff und/oder ein Molekularabbau durch chemische Plastifizierungsmittel statt. Durch die erfindungsgemäße Anwendung von Planetwalzenextruder mit Dispergierring können die niedrigpreisige Elastomere mit hohem Molekulargewicht auch bei herkömmlichem Einsatz von Wärme, Sauerstoff und chemischen Plastifizierungsmitteln besser plastifiziert werden.

Soweit eine Oxidation des Kautschuks bzw. der Elastomere gewünscht ist, kann ein Sauerstoffeintrag in den Extruder an verschiedenen Stellen im Extruder erfolgen.

Vorzugsweise erfolgt der Sauerstoffeintrag durch Anreicherung der Luft im Fülltrichter des Füllteiles oder im Füllteil selbst mit Sauerstoff, solange die mit dem Sauerstoffzustrom verbundene Störung mit einer

Stopfeinrichtung/Stopfwerk überwunden werden kann.

Soweit der Zutritt von Sauerstoff mit Schutzgas verhindert werden soll, wird das Schutzgas vorzugsweise auch im Fülltrichter des Füllteiles oder im Füllteil selbst zugeführt, solange die mit dem Schutzgaszustrom verbundene Störung mit einer Stopfeinrichtung/Stopfwerk überwunden werden kann.

Die Stopfeinrichtung kann verschiedene Formen haben. Bei geringer notwendiger Förderwirkung eignet sich ein Rührarm, dem mit entsprechend schräg gestelltem Paddel eine geringe Förderwirkung gegeben ist. Bei notwendiger größerer Förderwirkung können mehrere solcher Rührarme vorgesehen sein. Bei notwendiger noch größerer Förderwirkung kann ein Stopfwerk mit der Bauart eines Einschneckenextruders oder mit der Bauart eines Doppelschneckenextruders vorgesehen sein. Mit der Stopfeinrichtung in der Bauart eines Einschneckenextruders oder Doppelschneckenextruders lassen sich auch feinkörnige/staubförmige Feststoffe in das Füllteil eintragen, wenn die Feststoffe mit einem gasförmigen Trägermedium zu dem Fülltrichter über dem Füllteil gefördert werden. Vorzugsweise findet im Fülltrichter eine Trennung der Feststoffe von dem gasförmigen Trägermedium statt. Das gasförmige Trägermedium wird abgezogen. Die Feststoffe werden mit einem Stopfwerk in das Füllteil gefördert.

Wenn auch mit der Stopfeinrichtung/Stopfwerk kein ausreichender Materialeintrag gesichert ist, kann der Sauerstoffeintrag im Füllteil selbst erfolgen.

Vorzugsweise wird der Sauerstoff dabei zugegeben, solange sich das in den Füllteil eingetragene Material noch in lockerer Schüttung befindet und der zugeführte Sauerstoff die Schüttung durchdringen kann. Das ist zum Beispiel im Füllteil unmittelbar unter dem Fülltrichter der Fall.

Für die Schutzgaszuführung gilt entsprechendes wie für die Sauerstoffzuführung.

Die Plastifizierung und ein gewünschter Molekularabbau können durch die Verarbeitungstemperatur/Bearbeitungstemperatur im Extruder stark beeinflußt werden. Je höher die Temperatur ist, desto stärker ist der Molekularabbau.

Der Molekularabbau äußert sich in einem verringerten Molekulargewicht. Die Plastifizierung führt zu einer gewünschten Fließfähigkeit des Materials. Die Fließfähigkeit erlaubt die Einmischung von eigenschaftsverändernden Stoffen, aber auch von bloßen Füllstoffen, welche die Eigenschaften möglichst wenig beeinflussen sollen, aber für die Mischung einen wirtschaftlichen Vorteil bringen.

Die mechanische Bearbeitung kann durch Gleitmittel unterstützt werden. Vorzugsweise finden dabei Flüssigkeiten Anwendung.

Allerdings sind die Gleitmittel im fertigen Produkt zumeist unerwünscht. Zum Entfernen der Gleitmittel ist ein flüssiges Gleitmittel von Vorteil, das nach entsprechender Erwärmung im Wege der Entgasung aus der Mischung entweichen kann.

Die chemische Plastifizierung findet regelmäßig nur in Ergänzung der mechanischen Plastifizierung statt. Die gebräuchlichen chemischen Plastifizierungsmittel sind zum Beispiel aufgelistet in "pressure sensitive adhesives and applications" Istvan Benedek, Auflage 2004, Seite 506, aufgelistet. Die chemischen Plastifizierungsmittel müssen in der Regel entfernt werden.

Die flüssigen chemischen Plastifizierungsmittel lassen sich wie die flüssigen Gleitmittel durch Entgasen entfernen.

Es gibt auch andere Vorgänge, bei denen die Entgasung von großer Wichtigkeit ist. Dazu gehört die Materialtrocknung, wenn die Materialfeuchte für von Nachteil für die Qualität des Extrudats ist.

Eine Entgasung findet auch bei chemische Vorgängen statt, bei denen im Extruder eine Reaktion erzeugt wird, bei der eine flüssige oder gasförmige Phase anfällt. Die zu entfernende flüssige Phase wird dann vorzugsweise in einen gasförmigen Zustand übergeführt, in dem sie leicht abgezogen werden kann.

Gase können auch als Prozeßgase anfallen bzw. zum Einsatz kommen, wenn in dem Extruder chemische Reaktionen ablaufen. Überschüssige/nicht verbrauchte Prozeßgase müssen dann wieder entfernt werden. Das gleiche gilt in der Regel auch für anfallende Prozeßgase.

Das Entfernen unerwünschter Prozeßgase erfolgt gleichfalls durch Entgasen.

Von den unerwünschten Prozeßgasen zu unterscheiden sind allerdings Treibgase zur Herstellung von Kunststoffschaum. Diese Gase bleiben solange in der Schmelze, bis die Schmelze aus dem Extruder in eine Atmosphäre mit sehr viel niedrigerem Druck (zum Beispiel Umgebungsdruck) austritt. Dann expandiert das in der Schmelze eingeschlossene Gas und entstehen je nach Gasmenge mehr oder weniger Schaumzellen. Dieses Gas wird als Treibmittel bezeichnet. Die Schaumbildung wird vorzugsweise so gesteuert, daß der aus dem Extruder austretende Schaumstrang sich an der Umgebungsluft außen zu einer Haut verfestigt. Das in geschlossenen Schaumzellen eingeschlossene Gas verbleibt je nach Beschaffenheit mehr oder weniger in den Zellen. Je nach Beschaffenheit diffundiert ein mehr oder weniger großer Teil des als Treibmittel bezeichneten Gases aus dem Schaum aus und wird durch eindiffundierende Umgebungsluft ersetzt. Wünschenswert ist dabei ein möglichst vollständiger Ersatz ausdiffundierenden Gases durch eindiffundierende Umgebungsluft. Bei nur teilweisem Ersatz des Gases reduziert sich das Schaumvolumen unter dem Umgebungsdruck. Das wird als Schwinden des Schaumes bezeichnet.

Das Treibgas wird vorzugsweise in flüssiger Form in den Extruder eingedüst, wenn das Einsatzmaterial entsprechend vorbereitet ist. Die Vorbereitung des Einsatzmaterials umfaßt dabei eine Entgasung, sofern in der Verarbeitung des Einsatzmaterials unerwünschte gasförmige Bestandteile angefallen sind. Das kann dazu führen, daß in der Vorbereitung des Einsatzmaterials entgast wird und anschließend anderes Gas, nämlich Treibgas zugeführt wird.

Zur Entgasung sind diverse Verfahren und Vorrichtungen bekannt. Dazu gehören Mehrfachentgasungen und Rückwärtsentgasung im Planetwalzenextruder.

Bei der Mehrfachentgasung wird an verschiedenen Stellen des Extruders gleichzeitig entgast. Dazu ist der modulare Aufbau der Planetwalzenextruder von großem Vorteil. Üblicherweise werden die verschiedenen Module hintereinander angeordnet und miteinander verspannt. Zwischen den verschiedenen Modulen lassen sich Entgasungsringe einbauen, die von Entgasungskanälen durchzogen sind und mit dem Innenraum des Extrudermoduls über Öffnungen in den Ringen verbunden sind. Außerdem sind die Entgasungsringe an einen Saugzug angeschlossen, so daß aus dem Innenraum des Extrudermoduls Gas abgezogen werden kann.

Die Mehrfachentgasung läßt sich auch durch Anbringung von Entgasungsbohrungen am Modul-Mantel an beliebiger Stelle verwirklichen. Der Mehrfachentgasung, der modulare Aufbau des Extruders und die Anwendung passender Module erlauben eine Entgasung an allen gewünschten Stellen.

Die Rückwärtsentgasung ist eine spezielle Entgasung am Planetwalzenextruder. Dabei wird der schmelzefreie Raum im Extrudermodul für die Entgasung genutzt. Der schmelzefreie Raum im Planetwalzenextrudermodul bildet sich eintrittsseitig, weil die Planetwalzenextrudermodule immer nur teilweise gefüllt werden und die sich im Innenraum des Moduls befindliche Schmelze durch Zentralspindel, Planetspindeln und Innenverzahnung des Gehäuse in Austrittsrichtung gefördert werden.

Es sind auch Entgasungen für das Füllteil entwickelt worden.

Die Entgasung beim Einfüllen von Ausgangsmaterial in das Füllteil der Extrusionsanlage beinhaltet eine Trennung der von dem Ausgangsmaterial mitgeführten Luft, gegebenenfalls auch von speziellen Gasen für den Materialtransport von dem Ausgangsmaterial. Bei dieser Entgasung wird die vom Ausgangsmaterial mitgeführte Luft/Gas vor dem Eintritt in den Extruder über Filter abgezogen.

Dabei kommen unterschiedliche Formen der Entgasung vor.

Wahlweise kommen Schleusen vor, wie sie in der DE10334343 beschrieben sind. Dabei handelt es sich zumeist um übereinander stehende trichterförmige Kammern mit einem Übergang von der oberen Kammer in die untere Kammer mit einem Schieber in dem Übergang sowie einem Schieber an der Einfüllöffnung der oberen Kammer. Die untere Kammer ist mit einer Dosiervorrichtung versehen.

Das für die Extrusion vorgesehenen Material wird bei geöffneter Einfüllöffnung und bei geschlossenem Schieber in dem Übergang in die obere Kammer eingefüllt. Bei Erreichen eines gewünschten Füllungsgrades wird der Schieber an der Einfüllöffnung der oberen Kammer geschlossen und die in der oberen Kammer eingeschlossene Luft mittels eines Saugzuges in wirtschaftlich vertretbarem Umfang abgezogen. Dabei ist es von Vorteil, wenn zunächst in einem Druckbehälter mit größerem Volumen kontinuierlich ein Unterdruck erzeugt wird und wenn dieser Druckbehälter nach Verschließen der oberen Kammer mit dieser durch Öffnen eines Schiebers in einer Verbindungsleitung verbunden wird. Dadurch strömt solange Luft aus der oberen Kammer in den Druckbehälter, bis ein gewünschter Unterdruck gegenüber der Umgebung entstanden ist. Je geringer der Luftdruck im Druckbehälter ist, desto schneller stellt sich der gewünschte Unterdruck in der oberen Kammer ein. Danach wird die Verbindung durch Schließen des Schiebers unterbrochen. Während der Luftströmung aus der oberen Kammer in den Druckbehälter läuft der Saugzug zur Luftdruckverringerung in dem Druckbehälter weiter.

Vorzugsweise ist das Fassungsvolumen (Volumen des Innenraumes) vom Druckbehälter mindestens 2fach, noch weiter bevorzugt mindestens 3fach und höchst bevorzugt mindestens 4fach größer als das Fassungsvolumen der oberen Kammer.

Nach Erreichen des gewünschten Unterdruckes wird der Schieber im Übergang zur unteren Kammer geöffnet, so daß das für die Extrusion vorgesehene Material aus der oberen Kammer in die untere Kammer strömen kann. Dies kann bei Bedarf durch ein Dosierwerk gesteuert werden. Aus der unteren Kammer wird das Material in den Extruder kontinuierlich eindosiert. Parallel zum Materialabzug aus der unteren Kammer wird die obere Kammer wieder befüllt und dort ein Unterdruck erzeugt.

Um zu verhindern, daß Material beim Abziehen von Luft aus der oberen Kammer mit in den Druckbehälter gezogen wird, ist vorzugweise an der Austrittsöffnung der oberen Kammer ein Filter vorgesehen.

Das am Filter abgeschiedene Ausgangsmaterial fällt entweder aufgrund eigenen Gewichtes von der Einfüllöffnung nach unten oder wird mit einer rotierenden Schnecke oder mit Hilfe anderer bewegter Einfüll-Hilfsmittel zwangsweise von dem Filter entfernt.

Wahlweise kann dabei auch mit einer Materialschicht auf dem Filter gearbeitet werden, welche den Filter vorteilhaft ergänzt. Das heißt, je dicker die Materialschicht auf dem Filter ist, desto weniger Material kann durch diese Schicht hindurch dringen. Die Materialschicht auf dem Filter bewirkt dann gleichfalls eine Abscheidung von Material aus der abgezogenen Luft. Durch fortwährendes Abstreifen von Material mit den erläuterten Werkzeugen kann die Schichtdicke auf dem Filter so eingestellt werden, daß eine wirksame Materialschicht vorhanden ist und zugleich das Abziehen von Luft nicht verhindert wird.

Wahlweise sind die Abstreifwerkzeuge in der oberen Kammer auch verstellbar angeordnet, so daß die Dicke der Materialschicht und die Filterwirkung der Materialschicht einstellbar ist.

Soweit ohne Abstreifwerkzeuge gearbeitet werden soll, kann das sich auf dem Filter (materialseitig) sammelnde Material in zeitlichen Abständen durch einen kurzen Druckluftstoß an der dem abgetrennten Material abgewandten Seite(Reinseite) abgeblasen werden. Ein kurzer Druckluftstoß kann für den Filterbetrieb unschädlich sein. Das abgeblasene Material fällt dann nach unten. Im dem Fall sind vorzugsweise mehrere Luftabzugsöffnungen mit Filter an der oberen Kammer verteilt und über entsprechende Verbindungsleitung mit dem Saugzug beaufschlagbar. Ferner sind dann Schieber an den verschiedenen Leitungen vorgesehen, so daß sich bei jeder Filterreinigung mit Druckluftstoß zugleich an anderer Stelle ein Luftabzug mit Filter an der oberen Kammer aktiviert werden kann.

Wahlweise können auch Zyklonfilter oder Trommelfilter in der oberen Kammer zum Einsatz kommen.

Bei diesen Filtern wird die mit Material beladene Druckluft in Drehung versetzt. Es entsteht ein Luftstrudel.

Das Material sammelt sich dann aufgrund seines Gewichtes bzw. seiner Masse am äußeren Rand des Luftstrudels. In der Strudelmittel befindet sich im Wesentlichen materialfreie Luft, die abgezogen werden kann.

Wahlweise kann auch ein Zyklonfilter oder Trommelfilter mit einem üblichen Filtersieb kombiniert werden.

Anstelle von Luft können auch andere Gase als Trägermedium vorkommen und vom Material zu trennen sein, zum Beispiel, wenn das Material mit inertem Gas transportiert worden ist, oder wenn in der Materialschüttung Prozeßgase enthalten sind.

Dann findet die Entgasung im Füllbereich vorzugsweise in gleicher Weise wie bei Luft statt.

Zu den Einzelheiten bekannter Entwicklungen wird Bezug genommen auf folgende Druckschriften:
DE10048028, DE10054854, DE10066229, DE19518255, DE19852493, DE19856235, DE102006001171, DE102006002176, DE102006033089, DE102006054204, DE102008018686, DE102010026535, DE102010030706, DE102010049392, DE102012008169.

Vorzugsweise wird eine besondere Entgasung durch eine Anwendung der Entgasung am Füllteil und durch eine anschließende Entgasung mittels eines Seitenarmextruders erreicht.

Der Seitenarmextruder wird an einer gewünschten Stelle am Extrudergehäuse angeflanscht.

Der Seitenarmextruder ist an sich zum Eintragen weiteren Materials bestimmt. Dazu befindet sich eine entsprechende Öffnung im Extrudergehäuse. Wenn der Seitenarmextruder aber zugleich als Doppelschneckenextruder oder als Planetwalzenextruder ausgebildet ist, so kann dieser Extruder auch für die Entgasung genutzt werden. Dieser Extruder wird dann leer laufen lassen. Leer laufen lassen heißt: mit dem Seitenarmextruder wird kein Material in den Extruder eingetragen. Zugleich wird ein Unterdruck an den Seitenarmextruder angelegt.

Der Vorteil dieses Verfahrens ist, daß der Schmelzedruck im Extruder nicht zur Entgasung an der Entgasungsstelle reduziert werden muß. Bei anderen Entgasungen wird der Schmelzedruck reduziert, um einen (übermäßigen) Schmelzeaustritt zu verhindern. Ein geringer Schmelzeaustritt kann mit einem Entgasungsdom aufgefangen werden. In dem Entgasungsdom sammelt sich die austretende Schmelze und kann wieder in den Extruder zurückfließen.

Bei dem zur Entgasung benutzten Seitenarmextruder drängt der Seitenarmextruder die austretende Schmelze wieder in den Extruder zurück, während das frei werdende Gas entweichen kann. Eine an dem Seitenarmextruder angeschlossene Saugleitung zieht das entweichende Gas ab. Seitenarmextruder sind üblicherweise horizontal angeordnet. In dieser Anordnung kann der Seitenarmextruder auch zur Entgasung genutzt werden. Bessere Entgasungsergebnisse stellen sich mit einer Anordnung des zur Entgasung verwendeten Seitenarmextruders über dem Planetwalzenextruders ein.

Vorzugsweise ist der Seitenarmextruder in aufrechter Stellung auf dem Planetwalzenextruder montiert. Besonders gute Entgasungsergebnisse stellen sich bei senkrechter Stellung des Seitenarmextruders auf dem Planetwalzenextruder ein.

Wahlweise folgen dem zur Entgasung genutzten Seitenarmextruder noch eine oder mehrere weitere Entgasungsstellen am Extruder. Dazu kann unterschiedlicher Anlaß gegeben sein. Der Entgasung durch den Seitenarmextruder kann auch eine Entgasung am Füllteil oder anderen Stellen des Extruders vorausgehen.

Die Entgasung mittels Seitenarmextruder erfolgt vorzugsweise nach der Plastifizierung der Elastomere.

Maßgeblich für die Plastifizierung ist die Bearbeitung der Elastomere im Planetwalzenextruder. Soweit mit einem einzigen Planetwalzenextruder bzw. Planetwalzenextruderabschnitt bereits eine Plastifizierung mit einer Viskosität erreicht wird, die innerhalb der oben wiedergegebenen erfindungsgemäßen Grenzen liegt, ist eine weitere Plastifizierung von Kautschuk und vergleichbarer Elastomere entbehrlich, weil damit die Voraussetzung für ein Einmischen von weiteren Mischungsbestandteilen gegeben ist.

Bei Nichterreichen der erfindungsgemäßen Viskositätsgrenzwerte kann der Planetwalzenextruder verlängert werden. Die Verlängerung des Planetwalzenextruders bewirkt bei sonst gleichen Rahmenbedingungen eine Verlängerung der Bearbeitungsdauer. Die Dauer der Bearbeitung ist ein wesentlicher Faktor der Plastifizierung. Die übliche Bearbeitungsdauer läßt sich an üblichen Modullängen von Planetwalzenextrudermodulen bei modularem Aufbau der Anlage ablesen. Die übliche Länge liegt bei etwa 400mm. Etwa heißt plus/minus 10%, vorzugsweise plus/minus 5%. Die Länge gilt weitgehend unabhängig von der Baugröße. Je nach Baugröße werden die Planetwalzenextruder in üblicher Weise bewegt. Die Bewegung wird dabei an der Drehzahl der Zentralspindel gemessen. Die übliche Drehzahl der Zentralspindel nimmt mit zunehmender Baugröße der Planetwalzenextruder ab. Die Baugrößenangaben entsprechen üblicherweise dem Teilkreisdurchmesser der Innenverzahnung des die Zentralspindel umgebenden Gehäuses.

Zu den Rahmenbedingungen gehört auch der verwendete Zahnmodul. Üblich ist in Normalausführung:

| Baugröße | Zahnmodul | Drehzahl der Zentralspindel in Upm (Umdrehungen pro Minute) |
|---|---|---|
| 70mm | 2,5 | bis 220 |
| 100mm | 3 | bis 220 |
| 120mm | 3 | bis 220 |
| 150mm | 3 | bis 115 |
| 180mm | 3,5 | bis 80 |
| 200mm | 3 bis 3,5 | bis 80 |
| 250mm | 3 | bis 80 |
| 300mm | 3,5 | bis 80 |
| 400mm | 3,5 | bis 80 |

Folgende Baugrößen kommen in schwerer Ausführung der Planetwalzenextruder üblicherweise vor:

| Baugröße | Zahnmodul | Drehzahl der Zentralspindel |
|---|---|---|
| 280mm | 5,5 | bis 80 |
| 300mm | 5,5 | bis 80 |
| 400mm | 5,5 | bis 80 |
| 500mm | 5,5 | bis 80 |

Nach der Erfindung findet für die Verarbeitung von Kautschuk oder vergleichbaren Elastomeren mit einem Molekulargewicht von mehr als 500.000, vorzugsweise von mehr als 1.000.000 und noch weiter bevorzugt von mehr als 1.500.000 ein Planetwalzenextruder mit einer Bearbeitungslänge im Plastifizierungsbereich von mehr als 400mm Anwendung. Die Bearbeitungslänge im Plastifizierungsbereich kann auch mehr als 600mm oder sogar mehr als 800mm betragen.

Bei modularem Extruderaufbau wird zur Verlängerung des Plastifizierungsbereiches ein oder mehr Planetwalzenextrudermodule an den mindestens einen Planetwalzenextrudermodul angehängt. Üblicherweise bedingt das neben dem oder den Gehäuseabschnitten und Planetspindeln der zusätzlichen Planetwalzenextrudermodulen eine längere Zentralspindel. Bei einteiliger Zentralspindel ist damit eine Neufertigung der Zentralspindel verbunden. Bei mehrteiliger Zentralspindel mit Verzahnungshülsen, welche auf einem Anker der sitzen und über den Anker miteinander verspannt werden, beschränkt sich der Aufwand auf die notwendigen zusätzlichen Hülsen und einen längeren Anker.

Nach der Erfindung kann auch ein wesentlicher Teil der Plastifizierung durch einen Dispergierring geleistet wird. Der Dispergierring wird zwischen zwei benachbarten Planetwalzenextrudermodulen oder am Anfang eines Extrudermoduls oder am Ende eines Planetwalzenextrudermoduls angeordnet. Der Dispergierring liegt in jedem Fall außerhalb der Bewegungsbahn der umlaufenden Planetspindeln. Bei einem einzigen für den Plastifizierungsbereich vorgesehenen Planetwalzenextrudermodul kann ein Dispergierring vor und hinter dem einen Planetwalzenextrudermodul oder nur hinter oder nur vor dem Planetwalzenextrudermodul angeordnet sein.

Wahlweise findet für die Plastifizierung eine mehrfache Anwendung von Dispergierringen statt:
Im Fall von zwei für den Plastifizierungsbereich hintereinander angeordneten Planetwalzenextrudermodulen kann ein Dispergierring
   - hinter dem in Strömungsrichtung des Materials ersten oder
   - dem zweiten Modul angeordnet sein oder
   - vor dem erstem Modul angeordnet sein oder
   - hinter beiden Moduln angeordnet sein
oder kann bei Verwendung von zwei Dispergierringen
   - ein Dispergierring vor dem ersten Modul und ein Dispergierring hinter dem ersten Modul oder
   - je ein Dispergierring hinter jedem Modul angeordnet sein oder
   - ein Dispergierring vor dem ersten Modul und ein Dispergierring hinter dem zweiten Modul angeordnet sein

Der Dispergierring hat im Plastifizierungsbereich die Aufgabe, den Durchflußquerschnitt für den Kautschuk bzw. die Elastomere soweit zu verringern, daß der Kautschuk bzw. die Elastomere beim Passieren des Dispergierrings eine starke mechanische Verformung erfahren, die zur Plastifizierung des Kautschuks bzw. der vergleichbaren Elastomere wesentlich beiträgt.

Vorzugsweise greift der Dispergierring in eine Nut der Zentralspindel, wobei die Nut einen definierten Spalt für den Durchtritt der Elastomere offen läßt, d.h. die Nutbreite ist größer als die Breite des Dispergierringes und die Nuttiefe größer als die Eindringtiefe des Dispergierringes.

Vorzugsweise besitzt der Spalt zumindest am Eintritt für das Einsatzmaterial eine Erweiterung, so daß der Kautschuk bzw. die Elastomere zunehmend komprimiert werden, je weiter sie in den sich verjüngenden Spalt eindringen. Nach Erreichen einer nachfolgend wiedergegebenen Spaltweite kann die erreichte Spaltweite gleich bleiben und trägt die Kompression erheblich zu der Plastifizierung des Kautschuks bzw. der Elastomere bei.

Der Spalt kann sich auch von der Anströmseite der Dispergierringe bis zur Austrittsseite hin verjüngen.

Wahlweise kann der Spalt sich am Ende erweitern. Dies hat den Vorteil einer kontrollierten Strömung ohne Gefahr von Anbackungen an sogenannten Totstellen.

Bei kürzeren Verjüngungen und Verjüngungen kann der Spalt zwischen der Verjüngung und der Erweiterung über eine bestimmte Länge gleichbleibend ausgebildet sein.

Wahlweise kann die Verjüngung auch so weit gestaltet sein, daß sie in die Erweiterung übergeht.

Der Spalt kann auch mehrere Verjüngungen und anschließende Erweiterungen zwischen beiden Stirnseiten der Dispergierringe zeigen.

Bereits mit einmaliger erfindungsgemäßer Anwendung des Dispergierringes mit einem einzigen Planetwalzenextruderabschnitt kann ein erheblicher Plastifizierungsbeitrag geleistet werden.

Oberhalb der Zentralspindel verhindert der Dispergierring vorzugsweise den Durchtritt von Elastomeren.

Das gesamte Einsatzmaterial wird im Extruder durch den engen Spalt zwischen Zentralspindel und Dispiergierring gedrückt, der dadurch entsteht, daß eine Nut in die Zentralspindel gearbeitet worden ist, in die der Dispergierring unter Einhaltung eines allseitigen Abstandes zu den gegenüberliegenden Nutflächen ragt.

Für die Spaltweite ergeben sich, bezogen auf die Baugröße des Extruders, zum Beispiel folgende Abmessungen:

| Baugröße | Spaltweite | Abweichungen plus/minus |
|---|---|---|
| 50mm | 1,5mm | 1mm/ 0,5mm |
| 70mm | 1,4mm | 1mm/0,75mm |
| 100mm | 1,6mm | 1mm/0,75mm |
| 150mm | 1,8mm | 1mm/0,75mm |
| 180mm | 2,5mm | 1,5mm/1mm |
| 200mm | 2mm | 2mm/1mm |
| 250mm | 3mm | 1,5mm/1,5mm |
| 280mm | 3,5mm | 2mm/1,5mm |
| 300mm | 3mm | 1,5mm/1,5mm |
| 350mm | 4mm | 1,5mm/1,5mm |
| 400mm | 3,5mm | 2mm/2mm |

Dabei ist die Bezeichnung der Baugröße von dem Teilkreisdurchmesser der Gehäuseinnenverzahnung abgeleitet.

Nach der Plastifizierung des Kautschuks und vergleichbarer Elastomere erfolgt die Einmischung gewünschter Mischungsbestandteile.

Die Einmischung erfolgt automatisch für die Mischungsanteile, welche mit dem Kautschuk bzw. den vergleichbaren Elastomeren in das Füllteil des Extruders aufgegeben werden.

Soweit Mischungsanteile erst nach Erreichen der Plastifizierung zugegeben werden, setzt deren Vermischung mit dem Kautschuk bzw. den Elastomeren erst mit der Zugabe ein.

Nach Erreichen der Plastifizierung und Einmischung der zuvor zugegebenen Mischungsbestandteile ist ein Dispergierring zur Plastifizierung entbehrlich. Gleichwohl kann eine anschließende Anwendung eines Dispergierringes oder mehrerer Dispergierringe von Vorteil sein, um die Dispergierung und Homogenisierung der Mischungsanteile in dem plastifizierten Kautschuk bzw. den Elastomeren zu verbessern.

Der zur Dispergierung von Mischungsanteilen verwendete Dispergierring kann die gleiche oder eine andere Bauweise und andere Abmessungen als die für das Plastifizieren von Kautschuk verwendeten Dispergierringe haben. Vorzugsweise erfolgt nach der Plastifizierung und Einmischung anderer Mischungsanteile noch solange eine Bearbeitung der Mischung im Extruder und wahlweise mit weiteren Dispergierringen, bis Masseproben bei einer Zusammendrückung auf 1mm oder weniger keine Einschlüsse mehr erkennen lassen.

Das gilt auch für den Fall der Zugabe weiterer Mischungsanteile, wenn diese Zugabe nach der Plastifizierung erfolgt ist.

Die weiteren Dispergierringe haben dann einen Abstand von der Zugabestelle für das weitere Material, der vorzugsweise größer 2D ist, der aber auch größer 3D und auch größer 4D sein kann.

Das zum Extrudieren verwendete Einsatzmaterial an Kautschuk oder vergleichbaren Elastomeren hat vorzugsweise eine Granulatform. Anderes Einsatzmaterial(einschließlich Plastizifierungsmittel, Füllstoffen, Stabilisatoren usw.) kommt auch in Granulatform, Flakes, Schnitzeln, Platten, Filamenten und Agglomeraten und anderen Partikeln vor, teilweise auch in flüssiger Form. Im Weiteren sind zu den festen Einsatzmaterialien nur die Partikel angesprochen. Das schließt alle Formen des Einsatzmateriales, auch Mischungen verschiedener Formen ein.

Vorzugsweise werden die Elastomere auf dem Weg bis zum Dispergierring geknetet und zugleich stark gekühlt.

Um das Kneten ohne Aufschmelzen zu bewirken, wird der Planetwalzenextruderabschnitt nach der Erfindung so eingestellt, daß sich die Materialverformung auf das Kneten beschränkt.

Für die Einstellung des Knetens können an dem Planetwalzenextruder verändert werden:
a) das Spiel zwischen den bewegten Planetwalzenteilen
b) die Anzahl der Planetspindeln
c) die Verzahnung der Planetwalzenteile

### Zu a)

Mit dem Spiel zwischen den bewegten Planetwalzenteilen wird das Maß der Verformung bestimmt, dem die Partikel unterliegen, wenn sie zwischen die Zähne der Planetwalzenteile gelangt. Je kleiner das Spiel ist, desto stärker wird die Verformung. Je größer das Spiel ist, desto geringer wird die Verformung.

### Zu b)

Das Besondere an Planetwalzenextrudern bzw. an Planetwalzenextruderabschnitten gegenüber Extrudern und Extruderabschnitten anderer Bauart ist neben einer extremen Verformungsleistung ein Hohlraum zwischen den die Zentralspindel umlaufenden Planetspindeln. In den Hohlraum kann das Material strömen.

Der Hohlraum wird durch Änderung der Anzahl der Planetspindeln beeinflußt. Je geringer die Zahl der Planetspindeln ist, desto größer wird der Hohlraum.

### Zu c)

Die Verzahnung kann unterschiedliche Beschaffenheit haben.

Neben der üblichen Normalverzahnung oder Standardverzahnung sind auch die Igelverzahnung und die Noppenspindeln bekannt. Beide Verzahnungsarten entstehen vorzugsweise aus der Normalverzahnung durch Unterbrechung der sich wie ein Gewindegang um die Spindeln erstreckenden Zähne.

Die Normalverzahnung von Planetspindeln ist einerseits durch einen Querschnitt gekennzeichnet, wie ihn die ineinander greifenden Zähne der Zahnräder eines Getriebes zeigen. Anderseits verlaufen die Zähne nicht gerade sondern spindelförmig bzw. wie die Gewindegänge eines Schraubgewindes am Umfang entlang.

Die Gewindegänge werden auch in dieser Form in das Ausgangsmaterial der Planetspindeln geschnitten, z.B. gedreht oder gefräst.

Bei den Gewinden wird unterschieden zwischen linksgängem Gewinde und rechtsgängigem Gewinde. Es gibt auch mehrgängige Gewinde.

Die gleiche Unterscheidung findet an Extruderspindeln statt.

Eine Noppenverzahnung entsteht, wenn z.B. in eine rechtsgängige Verzahnung eine linksgängig verlaufende Nut ähnlich einem Gewindegang eingearbeitet wird. Durch die Nut werden die Gewindegänge der Planetspindeln unterbrochen. Die Nut kann gleiche oder eine andere (geringer oder größere) Steigung als die Verzahnung der Spindeln besitzen. Die Steigung der Nut weicht vorzugsweise höchstens um 50% von der Steigung der Verzahnung ab.

Bei der Igelspindel wird die Normalverzahnung durch ringförmige Nuten am Spindelumfang unterbrochen.

Die unterbrochene Verzahnung kann auf einzelne Planetspindeln wie auch auf Planetspindelteile beschränkt sein. Die unterbrochene Verzahnung kann in mehreren oder in allen Planetspindeln vorgesehen sein.

Bei teilweise Noppenverzahnung an den Planetspindeln kann es gewünscht sein, den normalverzahnten Teil der Planetspindeln in Förderrichtung des Extruders am hinteren Ende (am austragseitigen Ende der Planetwalzenteile) anzuordnen, um dort einen Förderdruck aufzubauen, der einen Übergang des Materials in den weiteren Extruderbereich sicherstellt.

Wahlweise können auch Planetspindeln mit unterbrochener Verzahnung sich mit normal verzahnten Planetwalzenspindeln abwechseln.

Wahlweise können auch einzelne normalverzahnte Planetspindeln zwischen Planetspindeln mit unterbrochener Verzahnung angeordnet sein oder umgekehrt.

Sofern die Unterbrechungen der Verzahnung in mehreren korrespondierenden Planetwalzenteilen vorgesehen ist, kann die Verzahnung so angeordnet werden, daß die Unterbrechungen der Verzahnung im einen Planetwalzenteil mit den Unterbrechnungen im korrespondierenden Planetwalzenteil fluchten oder im Verhältnis zu diesen Unterbrechungen versetzt sind. Der Versatz kann ein Maß haben, das gleich einem Bruchteil der Zahnlücke zwischen zwei Zähnen oder ein Mehrfaches der Zahnlücke zwischen zwei Zähnen ist, wobei ein Mehrfaches auch eine Zahl kleiner 2 sein kann.

Durch die Unterbrechung der Zähne entstehen Öffnungen, in welche die Elastomere strömen können.

Das unter b) beschriebene Hohlraumvolumen und die unter c) beschriebene unterbrochene Verzahnung reduzieren den von den Planetwalzenteilen ausgehenden Förderdruck, so daß das Einsatzmaterial für eine notwendige Entgasungsdauer in dem Extruder bzw. in dem Extruderabschnitt verbleiben kann.

Vorzugsweise sind die Extruder modular aufgebaut. Infolgedessen können Module unterschiedlicher Bauweise und unterschiedlicher Funktion miteinander kombiniert werden. Dadurch ist es möglich, mit der Extrusionsanlage in einer Linie unterschiedliche Aufgaben zu erledigen.

Außerdem können gleiche Module oder unterschiedlich lange, aber sonst gleiche Module miteinander verbunden werden, um eine bestimmte Bearbeitungsstrecke zu erzielen.

Beim Kneten wird im Extruder bzw. im Extruderabschnitt/Modul in erheblichem Umfang Energie freigesetzt, die sich in dem Einsatzmaterial als Wärme zeigt.

Für die Kühlung sind übliche Temperierungseinrichtungen an Planetwalzenextrudern ausreichend. Üblich ist es, das Gehäuse zweischalig auszuführen und das Temperierungsmittel durch den Zwischenraum zu leiten. Üblich ist auch, die Zentralspindel mit Kanälen zu versehen, durch die gleichfalls Temperierungsmittel geleitet wird. Das übliche Temperierungsmittel ist Wasser, mit dem gekühlt wird.

Die Wasserkühlung erlaubt es, den Extruder relativ kalt zu fahren, so daß auch temperaturempfindliche Elastomere verarbeitet werden können. Die Kühlung ist so stark, daß zwischen dem Füllteil und dem Dispergierring eine Temperatur des Einsatzmaterials von weniger als 120 Grad Celsius, vorzugsweise von weniger also 115Grad Celsius und noch weiter bevorzugt von kleiner/gleich 110 Grad Celsius eingehalten werden kann.

Günstig ist auch, wenn die Temperatur des Einsatzmaterials zwischen dem Füllteil und dem Dispergierring um mindestens 2 Grad Celsius, vorzugsweise um mindestens 4 Grad Celsius, noch weiter bevorzugt um mindestens 6 Grad Celsius und höchst bevorzugt um mindestens 8 Grad Celsius reduziert werden kann.

Die im Sinne der Erfindung optimalen Temperaturen sind materialabhängig. Viele Elastomere, insbesondere Naturkautschuke, können mit einer Temperatur bis 120 Grad Celsius verarbeitet werden, ohne daß diese Erwärmung zu einem wesentlichen Molekularabbau bei der Plastifizierung der Elastomere beiträgt. Zu den Elastomeren, welche eine höhere Bearbeitungstemperatur erlauben, gehört zum Butylkautschuk als synthetischer Kautschuk mit einer Verarbeitungstemperatur bis 160 oder 170 Grad Celsius.

Von der Elastomertemperatur bzw. Massetemperatur ist die Zylindertemperatur zu unterscheiden. Aufgrund des starken Energieaufwandes beim Plastifizieren wird im Extruder eine entsprechend große Wärmemenge frei, die über die Kühlung des innen verzahnten Gehäuses bzw. der innen verzahnten Gehäusebuchse ausgetragen werden muß. Dabei ist auch eine Kühlung der Zentralspindel hilfreich.

Zur Kühlung des Gehäuses bzw. der Buchse sind entsprechende Kühlkanäle im Gehäuse bzw. zwischen dem Gehäuse und der Buche vorgesehen, die mit einem Kühlmittel, zum Beispiel Wasser, durchströmt werden. Damit ausreichend viel Wärme über die Innenverzahnung des Planetwalzenextruders und die Außenverzahnung der Zentralspindel aufgenommen wird, soll die Temperatur dort weniger als die Hälfte der Massetemperatur sein.

Zur Einhaltung der gewünschten Massetemperatur kann auch die Drehzahl der Zentralspindel reduziert werden. Das ist gleichbedeutend mit einer Reduzierung der eingetragenen Energie.

Das Füllteil besitzt üblicherweise eine Schnecke.

Deshalb wird diese Bauart als Einschnecke bezeichnet.

Die Kombination einer Einschnecke mit Planetwalzenextrudermodulen gehört zum bewährten Stand der Technik. Dabei haben die verschiedenen Planetwalzenextrudermodule eine gemeinsame Zentralspindel, die sich als Schnecke in das Füllteil fortsetzt.

In der Homogenisierungszone wird die Temperatur des Einsatzmaterials weiter in dem Bereich gehalten, der für den Bearbeitungsweg zwischen dem Füllteil und dem Dispergierring vorgesehen ist. Günstig ist, wenn die Temperatur weiter gehalten wird, die unmittelbar vor dem Dispergierring erreicht worden ist.

In der Homogenisierungszone sind vorzugsweise Planetwalzenextruder vorgesehen. Dabei kann durch Wahl der Planetspindeln auf die Förderwirkung, Materialverweildauer und die Homogenisierung Einfluß genommen werden. Die Anmelderin hat zur Einflußnahme Planetspindeln mit verschiedenen Verzahnungsarten entwickelt. Dazu gehören Standardspindeln, Igelspindeln, Noppenspindeln und Transportspindeln.

Die Standardspindeln sind mit einer gleichbleibenden Verzahnung über der ganzen Länge versehen.

Die Herstellung der Igelspindeln geht üblicherweise von einer Standardverzahnung aus. Dabei werden in regelmäßigen Abständen ringförmige Eindrehnungen in die Standardverzahnungen eingearbeitet.

Die Herstellung der Igelspindeln geht üblicherweise auch von einer Standardverzahnung aus. Dabei wird zusätzlich zu einer linksgängigen Verzahnung eine rechtsgängige Verzahnung in die Standardspindeln geschnitten. Umgekehrt kann auch in Standardspindeln mit rechtsgängiger Verzahnung eine linksgängige Verzahnung geschnitten werden.

Durch die nachträglich eingeschnittene gegenläufige Verzahnung entstehen in den Zähnen Lücken. Von den ursprünglichen Zähnen bleiben noppenartige Teile stehen. Das hat zu der Bezeichnung Noppenspindeln geführt.

Die Herstellung der Transportspindeln ist auch von Standardspindeln ausgegangen. Dabei wird an mindestens einer Standardspindel mindestens ein Zahn entfernt. Wahlweise werden auch mehr Zähne entfernt. Vorzugsweise verbleiben mindestens jeweils 3 gleichmäßig am Umfang der Planetspindeln. Es kann auch jeder vierte oder jeder dritte oder jeder zweite Zahn entfernt werden. Es handelt sich um reduzierten Zahnbesatz im Unterschied zu nicht reduziertem Zahnbesatz. Die Entfernung der Zähne erfolgt vorzugsweise bis in den Zahngrund. Denkbar ist auch eine darüber hinausgehende Materialausarbeitung, ebenso eine teilweise Entfernung der Zähne.

Durch die ganze oder teilweise Entfernung bestimmter Zähne entsteht bei unverändertem Fortbestand der übrigen Zähne eine Planetspindel mit mehr Förderwirkung als eine reine Noppenspindel, wenn auch mit weniger Mischleistung als eine reine Noppenspindel. Gegenüber einer Standardspindel ist die Förderwirkung aber geringer und die Mischleistung höher. Gleichwohl läßt sich z.B. die gleiche Förderwirkung des Extruder erreichen, indem nach der Reduzierung des Zahnbesatzes an den Planetenwalzenspindeln die Zahl der Planetenspindeln erhöht wird. Dadurch ergibt sich eine höhere Planetspindelzahl.

Überraschenderweise beeinträchtigt das Entfernen von Zähnen die Laufruhe der Planetspindeln nicht, weil die Zähne wie Schrauben/Gewindegänge an der Oberfläche der Planetspindeln verlaufen. Bei ausreichender Länge der Spindeln und entsprechender Steigung umschlingen die schraubenförmig bzw. gewindegangförmig verlaufenden Zähne die Spindeln so häufig, daß die Planetspindeln zwischen der Zentralspindel und dem umgebenden Gehäuse sicher geführt und fixiert sind. Bei einer Planetspindel, bei der jeder zweite Zahn entfernt worden ist, ist
a) bei einem Planetspindeldurchmesser kleiner 160 mm eine erfindungsgemäß bearbeitete Spindellänge von mindestens 200 mm, bevorzugt von mindestens 300m und weiter bevorzugt eine Spindellänge von mindestens 400 mm und höchst bevorzugt eine Spindellänge bis 800 mm vorgesehen. Bei weniger entfernten Zähnen kann die Spindellänge kürzer sein, bei mehr entfernten Zähnen soll die Spindellänge länger sein.
b) bei einem Planetspindeldurchmesser von 160 mm und mehr ist eine Spindellänge von mindestens 400 mm, bevorzugt von mindestens 800m und weiter bevorzugt eine Spindellänge von mindestens 1200 mm und höchst bevorzugt eine Spindellänge bis 2500 mm vorgesehen. Bei weniger entfernten Zähnen kann die Spindellänge kürzer sein, bei mehr entfernten Zähnen soll die Spindellänge länger sein.

Die Bearbeitung der Planetspindeln kann auf alle bekannten Zahnmodule Anwendung finden, insbesondere auf die gebräuchlichen Module 1,5 bis 12 oder darüber hinaus bis 20. Die Zahnmodule sind von den oben erwähnten Planetwalzenextruderabschnitten/Modulen zu unterscheiden. Die Zahnmodule kennzeichnen die Größe der Zähne. Die Plaentwalzenabschnitte/Module werden mit den anderen Modulen zu dem jeweils gewünschten Extruder zusammengesetzt. Die Modulbauweise ist mit einem Baukastensystem vergleichbar und in der Regel besonders wirtschaftlich.

Die verschiedenen Planetenteile (Zentralspindel/Planetenspindeln/Innenverzahnung) eines Abschnittes/Moduls haben regelmäßig den gleichen Zahnmodul.

Wahlweise werden die Zähne nicht nachträglich entfernt, sondern findet eine Fertigung statt, bei der die Planetspindeln sofort in die Form gebracht werden, wie sie nach der oben beschriebenen Zahnentfernung entsteht.

Dazu ist zunächst darauf einzugehen, wie die Zähne bei herkömmlicher Verzahnung entstehen. Verbreitet ist die Herstellung durch Fräsen und

Schleifen. Dazu wird die Kontur der Verzahnung festgelegt und der Fräser entlang der Kontur bewegt. Der Fräser arbeitet dabei verhältnismäßig grob. Deshalb ist anschließend eine Feinbearbeitung üblich, z.B. durch Schleifen bei außen verzahnten Teilen oder durch Honen oder Erodieren bei innen verzahnten Teilen üblich. Es sind auch umformende Herstellungsverfahren für Getriebeteile bekannt, das sind Gießen und Sintern. Zu den Umformenden Herstellungsverfahren zählt Schmieden, Pressen, Ziehen, Walzen, Stanzen). Das Fräsen gehört zur spanenden Herstellung. Andere spanende Verfahren sind zum Beispiel Hobeln, Stoßen , Räumen, Schaben, Schleifen, Honen.

Allen Herstellungsverfahren für Verzahnungen ist gemeinsam, daß sie der festgelegten Kontur der Verzahnung folgen. Bei normaler Verzahnung wechselt ein Zahn mit einer Zahnlücke. Der Abstand zwischen zwei benachbarten Zähnen eines Teiles ist gleich

Bei der Festlegung der Kontur kommt es auf die Verzahnung an. Die Verzahnung folgt den allgemeinen Erkenntnissen der Getriebetechnik. Man unterscheidet verschiedene Grundformen von Verzahnungen: Evolventenverzahnung, Zykloidenverzahnung und Treibstockverzahnung. Darüber hinaus gibt es diverse Sonderformen.

Bei Planetwalzenextrudern hat sich die Evolventenverzahnung durchgesetzt. Die Evolventenverzahnung mit vollem Zahnbesatz wird im Folgenden als Normalverzahnung bezeichnet.

Bei der Evolventenverzahnungi werden die Flanken der Zähne des Zahnrades von Evolventen gebildet. Vorstellen kann man sich die Evolventen, wenn man sich den Zahnradgrundkreis als massiven Zylinder vorstellt, um den ein Faden gewickelt ist. Wird dieser Faden nun abgewickelt, so beschreibt der straff gespannte Endpunkt des Fadens die Figur einer Evolvente. Alle Punkte auf dem Faden, welche den ganzzahlig vielfachen Abstand vom Endpunkt aufweisen, bewegen sich somit auf der Evolvente eines anderen Zahnes. Die Evolventenverzahnungen haben folgende Vorteile:
Die Flanken zweier im Eingriff befindlicher Zahnräder berühren sich immer, und in diesen Berührungspunkten haben sie stets die annähernd gleiche Geschwindigkeit. Somit ist gewährleistet, daß die Übertragung der Drehbewegung reibungsarm erfolgt.
Gleichzeitig erlaubt die Evolventenverzahnung die gleichmäßige Übertragung von Drehmomenten durch eine konstante Übersetzung.
Sie ist unempflindlich gegen das Verschieben der Achsen der Zahnräder (Achsabstandsunabhängigkeit).
Sie ist einfach in der Fertigung durch standardisierte geradlinige Werkzeuge. Bei gleicher Geometrie des Werkzeuges sind Zahnräder mit unterschiedlicher Zähnezahl und unterschiedlicher Profilverschiebung frei miteinander kombinierbar.

Bei Planetwalzengetrieben ist man wie bei anderen Getrieben bemüht, mit möglichst geringem Spiel zwischen den Getriebeteilen zu arbeiten. Das Spiel kann bei der Festlegung der Kontur berücksichtigt werden. Bei Planetwalzenextrudern ist üblicherweise ein sehr viel größeres Spiel vorgesehen. Auch dieses Spiel kann bei der Festlegung der Zahnkontur berücksichtigt werden.

Bei üblicher Verzahnung folgt ein Zahn einer Zahnlücke und einer Zahnlücke ein Zahn, wobei die Zähne und die Zahnlücken gleich sind. Da die Zähne in die Zahnlücken greifen und die miteinander kämmenden/ineinander greifenden Getriebeteile die gleiche Verzahnung haben sollen, beinhalten die Zahnlücken eine spiegelverkehrte Abbildung der Zähne.

Bei der erfindungsgemäßen Gestaltung der Verzahnung sind die Zahnlücken aber anders als bei üblicher Verzahnung. Bei der oben beschriebenen Herstellung der erfindungsgemäßen Verzahnung werden dazu an vorhandenen Getriebeteilen einzelne oder mehrere Zähne entfernt. Alternativ werden schon bei der Festlegung der Zahnkontur einzelne oder mehrere Zähne entfernt. Die Herstellung folgt dann in der oben beschriebenen Weise der festgelegten Zahnkontur. Das heißt, im Falle der Anwendung eines Fräsers, folgt der Fräser der vorher festgelegten neuen Kontur mit größeren Zahnlücken. Entsprechendes gilt für andere Werkzeuge zur Herstellung der vorher festgelegten neuen Kontur.

Günstig ist es, wenn die Zahl der Zähne von Gehäuseinnenverzahnung(Buchsenverzahnung), Planetspindeln und Zentralspindel so gewählt ist, daß der Selbstreinigungseffekt der Planetwalzenteile gewahrt bleibt. Das ist zum Beispiel dann der Fall, wenn die Zähnezahl an der Zentralspindel und an der Gehäuseinnenverzahnung(Buchsenverzahnung) gerade ist und die Zähnezahl an den Planetspindeln ungerade ist. Dann wird die Schmelze in jedem Zwischenraum zwischen zwei Zähnen durch die in den Zwischenraum eindringenden Zähne anderer Teile des Planetwalzenextruders in Bewegung gebracht.

Die gleichen Verhältnisse ergeben sich bei ungeraden Zähnezahlen an Zentralspindel und Gehäuseinnenverzahnung und gerade Zähnezahl an den Planetwalzenspindeln.

Das gleiche Ergebnis kann durch unregelmäßiges Entfernen des Zahnbesatzes erreicht werden, zum Beispiel dadurch, daß nicht regelmäßig jeder zweite Zahn, sondern einmal oder mehrmals ein anderer Zahn, zum Beispiel der dritte Zahn entfernt wird oder zum Beispiel zwei ursprünglich neben einander stehende Zähne unberührt bleiben. Das heißt, die Bearbeitung erfolgt in unterschiedlichen Abständen. Dabei kann ausreichend sein, daß ein Abstand anders als die anderen Abstände ist. Es können auch mehrer Abstände anders sein.

Das gleiche Ergebnis kann auch dadurch erreicht werden, daß bearbeitete Planetwalzenspindeln mit unbearbeiteten Planetwalzenspindeln kombiniert werden oder das unterschiedlich erfindungsgemäß bearbeitete Planetwalzenspindeln miteinander kombiniert werden.

Es kann vorteilhaft sein, Planetwalzenspindeln zu verwenden, die auf der Länge unterschiedliche Verzahnungen aufweisen. Dann finden sich an einer Planetspindel unterschiedliche Verzahnung. So können die Planetspindeln auf ihrer Länge teilweise die vorstehend beschriebenen Bearbeitung aufweisen und in dem übrigen Bereich normal verzahnt sind oder als Noppenspindeln ausgebildet sind oder eine andere Verzahnung aufweisen.

Diese kann dadurch erfolgen, daß die Bearbeitungswerkzeuge am Übergang von dem einen Bereich in den anderen Bereich auslaufen. In der Kombination mit Noppenbildung heißt das, die gegenläufige Verzahnung, welche in der oben beschriebenen Form die Noppenspindeln, läuft an dem erwähnten Übergang aus. Desgleichen läuft die Bearbeitung beim Übergang von einem Bereich in den anderen aus.

Die mehrteiligen Planetspindeln können auch einen mehrfachen Verzahnungswechsel besitzen.

Es kommen auch einteilige Planetspindeln in Betracht, die über Ihrer Länge in der Verzahnung einen oder mehrere Verzahnungswechsel zeigen.

Für jeden Wechsel der Verzahnung gelten die Ausführungen zur nachträglichen Entfernung von Zähnen und der vorhergehenden Festlegung der Zahnkontur entsprechend.

Die mit Kautschuk oder vergleichbaren Elastomeren hergestellten Mischungen lassen sich vielfältig verwenden, zum Beispiel für die weitere Herstellung von Klebebändern, in dem aus der Klebermasse ein dünner Film erzeugt und auf ein Trägerband aufgetragen wird.

In der Zeichnung ist ein Ausführungsbeispiel der Erfindung dargestellt.

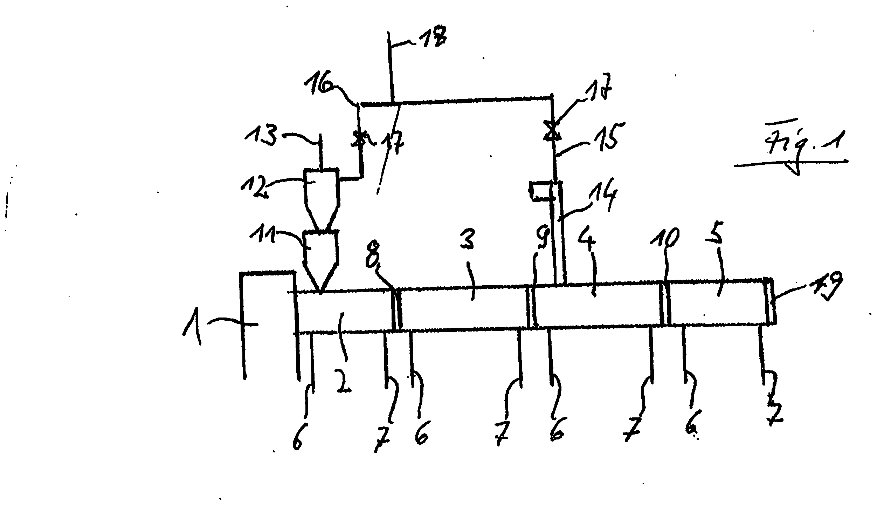

Die Zeichnung zeigt Fig. 1 eine Extrusionsanlage, bestehend aus einem Antrieb 1, einem Füllteil 2, einem Planetwalzenextrudermodul 3, einem Planetwalzenextrudermodul 4 und einem Planetwalzenextrudermodul 5.

Die Module 3,4,5 besitzen im Ausführungsbeispiel jeweils eine Länge von 400mm.

Jeder Modul 3,4,5 besitzt eine nicht dargestellte außen verzahnte Zentralspindel, nicht dargestellte, außen verzahnte Planetspindeln und ein Gehäuse mit einer innen verzahnten Buchse.

Die Planetspindeln kämmen mit der Verzahnung der Buchse und gleichzeitig mit der Verzahnung der Zentralspindel.

Die Verzahnung ist eine Schrägverzahnung, hier eine Evolventenverzahnung, so daß die einzelnen Zähne entsprechend der Steigung der Zähne zur Extruderlängsachse wie Schraubengänge an den verzahnten Flächen verlaufen

Alle Module 3,4,5 besitzen eine gemeinsame Zentralspindel, die sich im Fullteil als Einzugschnecke fortsetzt. Das heißt, eine gemeinsame Zentralspindel durchdringt alle Module und bildet in dem nach Art eines Einschneckenextruders ausgebildeten Füllteil 2 die Einzugschnecke.

Darüber hinaus ist die Zentralspindel mit dem einen Ende mit dem Antrieb 1 verbunden.

Die Gehäuse aller Module und des Füllteiles sind mit einer Temperierung versehen. Als Temperierungsmittel dient im Ausführungsbeispiel Wasser. Das Temperierungsmittel strömt in Kanälen zwischen dem Gehäuse und der darin sitzenden Buchse. Die Kanäle entstehen durch Nuten am Umfang der Buchsen, die wie Schraubengänge an einem Gewinde verlaufen. Die Nuten werden zu Kanälen, wenn die Buchsen in die Gehäuse geschoben werden.

Das Temperierungsmittel wird durch Zuleitungen 6 zu den Kanälen geführt und über Leitungen 7 von den Kanälen zu einem Wärmetauscher geführt, in dem je nach Bedarf dem Temperierungsmittel Wärme zugeführt oder Wärme entzogen wird.

Die Gehäuse der Module 3,4,5 und des Füllteiles 2 sind zylindrisch ausgebildet und an beiden Enden mit einem Kragen versehen. Der Kragen dient dazu, die Gehäuse miteinander zu verbinden. Die Verbindung zwischen dem Füllteil 2 und dem Modul 3 ist mit 8 bezeichnet.

Die Planetspindeln werden in Förderrichtung der Extrusionsanlage durch Gleitringe in Position gehalten. Die Gleitringe sind im Ausführungsbeispiel an den Stoßstellen 9 und 10 der Module 3,4, 5 zwischen den Gehäuseenden gehalten. Der Gleitring der Planetspindeln des Moduls 5 sind bei 19 zwischen dem zugehörenden Ende und einer nicht dargestellten Extrusionsdüse gehalten. Im Übrigen sind die Planetspindeln zwischen der Zentralspindel und der umgebenden Buchse gehalten.

Der Gleitring an der Stelle 9 zwischen den Modulen 3 und 4 dient nicht nur der Positionierung der Planetspindeln sondern im Ausführungsbeispiel auch besondere Ringkonstruktion mit einem Dispergierring. Der Dispergierring besteht aus zwei Hälften, die sich in eine entsprechende Ausnehmung der Ringkonstruktion einsetzen lassen. Der Dispergierring wird nach Positionierung der Ringkonstruktion mit dem Gleitring eingesetzt. Dabei greift der Dispiergierring in eine nicht dargestellte Nut der Zentralspindel. Die Abmessungen der Nut sind größer als der in die Nut greifende Teil des Dispergierringes. Dadurch verbleibt nach dem Einsetzen des Dispergierringes ein Spalt, durch den das Einsatzmaterial strömen muß.

Die Ringkonstruktion wird wie die übrigen Gleitringe zwischen den Modulenden/Gehäuseenden eingespannt.

Am Füllteil 2 ist eine Schleuse luftdicht montiert. Die Schleuse besteht aus zwei trichterförmgin Kammern 11 und 12. Die untere Kammer 11 ist mit der Einfüllöffnung verbunden. Zwischen der unteren Kammer 11 und der Einfüllöffnung ist eine Dosiervorrichtung in Form einer Zahnradschleuse vorgesehen.

Die obere Kammer 12 besitzt eine Verbindung mit der unteren Kammer. An der Verbindungsstelle ist ein Schieber vorgesehen. Das Einsatzmaterial wird über eine Leitung 13 der oberen Kammer zugeführt. Am Eintritt in die obere Kammer ist ein weiterer Schieber vorgesehen.

Die Schieber erlauben einen luftdichten Verschluß der Kammer 12.

Die Kammer 12 ist außerdem mit einer Saugleitung 16 verbunden.

In der Saugleitung 16 ist ein weiterer Schieber 17 vorgesehen.

Mit der Vorrichtung kann die in der Kammer 12 eingeschlossene Luft teilweise abgesaugt werden.

An dem Modul 4 ist ein Seitenarmextruder 14 montiert. Anders als in herkömmlicher, horizontaler Stellung steht der Seitenarmextruder 14 senkrecht auf dem Modul 4. Außerdem dient der Seitenarmextruder nicht zum Eintragen von Material, sondern zur Entgasung.

Dazu läuft der Seitenarmextruder 14 im Betriebsfall leer.

An dem Seitenarmextruder 14 ist eine Saugleitung 15 angeschlossen. In der Saugleitung 15 ist wie in der Saugleitung 16 ein Schieber 17 vorgesehen.

Die beiden Saugleitungen 15 und 16 münden in eine gemeinsame Saugleitung 18.

Mit dem Füllteil 2 wird das Einsatzmaterial in die Anlage eingezogen.

Zu dem Einsatzmaterial gehören im Ausführungsbeispiel Acrylpolymere als Elastomere und diverse Zuschlagstoffe zur Herstellung eines PSA.

Das Einsatzmaterial gelangt zunächst in die Kammer 12. Dort wird die mit dem Einsatzmaterial in die Kammer 12 eingesaugte Luft weitgehend abgesaugt. Beim Absaugen ist die Kammer 12 gegenüber der Kammer 11 und gegenüber der Zuführungsleitung 13 verschlossen.

Nach Erreichen eines gewünschten Unterdruckes in der Kammer 12 wird die Kammer 12 geöffnet, so daß das Material in die Kammer 11 fließen kann. Nach Füllen der Kammer 11 wird die Kammer 12 wieder gegenüber der Kammer 11 verschlossen.

Aus der Kammer 11 wird das Material in das Füllteil 2 dosiert.

Die Füllschnecke in dem Füllteil verdichtet das Material und drückt das Material in den Modul 3. Dort wird das Material bei einer Temperatur zwischen 100 und 120 Grad Celsius von den Planetspindeln geknetet.

Der Knetvorgang wird weitgehend durch die Verzahnung der Modulteile bestimmt. Im Ausführungsbeispiel ist eine Standardverzahnung an allen Teilen vorgesehen.

Nach der Bearbeitung im Modul 3 wird das Material durch den Spalt am Dispergierring gedrückt. Das ist mit einer starken mechanischen Verformung der Elastomere verbunden. Die Elastomere werden plastifiziert, so daß eine bleibende Einmischung der Zuschlagstoffe in die Elastomere stattfinden kann. Zugleich findet eine Entgasung über den Seitenarmextruder 14 statt, der als Doppelschneckenextruder ausgebildet ist. In anderen Ausführungsbeispielen ist ein Planetwalzenextruder als Seitenarmextruder vorgesehen. Aber auch die Verwendung eines Einschneckenextruder ist als Seitenarmextruder geeignet, der die nachfolgenden Bedingungen erfüllt.

Der Seitenarmextruder 14 arbeitet leer. Der Seitenarmextruder hat die Aufgabe, das in dem Modul 4 unter Druck stehende Material und durch die Gehäuseöffnung herausdrängende Material zurück zu drängen. Zugleich hat der Seitenarmextruder die Aufgabe, frei werdendes Gas herauszulassen. Der Seitenarmextruder ist deshalb gasdurchlässig. Das wird durch entsprechend großes Spiel zwischen den beiden Schnecken in dem die Schnecken umgebenden Gehäuse des Seitenarmextruders erreicht.

Planetwalzenextruder und Einschneckenextruder können genauso gasdurchlässig wie der Doppelschneckenextruder ausgelegt werden.

Zum Entgasen ist eine Saugleitung 15 an den Seitenarmextruder angeschlossen. Die in den Saugleitungen 15 und 16 vorgesehenen Ventile steuern den Saugzug, so daß unabhängig von der Quelle des Saugzuges bewirkt werden kann, daß der Unterdruck des Saugzuges in tolerierbaren Grenzen bleibt.

Die Bearbeitung des Materials in den Modulen 4 und 5 wird als Homogenisierung bezeichnet. Dabei sind im Modul 4 allein Standardverzahnungen vorgesehen. Davon weicht der Modul in den Planetspindel ab. Dort sind die oben beschriebenen Transportspindeln vorgesehen.

In weiteren Ausführungsbeispielen findet auch zwischen den Modulen 4 und 5 und gegebenenfalls zwischen weiteren vorgesehenen Modulen eine Entgasung statt. Dazu sind die am diesen Stellen Ringkonstruktionen vorgesehen, welche über den Anlaufring hinaus noch weitere Funktionen aufweisen, nämlich eine Entgasung. Dazu ist in der Ringkonstruktion ein ringförmiger Entgasungskanal vorgesehen, der sich in Strömungsrichtung des Materials, also zu dem Innenraum des Moduls 5 hin öffnet. Dort bildet sich im Extrusionsbetrieb wegen teilweiser Füllung des Moduls ein Hohlraum, der für die Entgasung geeignet ist. Darüber hinaus ist die Ringkonstruktion/Ringraum mit einer Saugleitung verbunden. Die Saugleitung kann dabei leicht zwischen die Enden der Module 4 und 5 geführt werden.

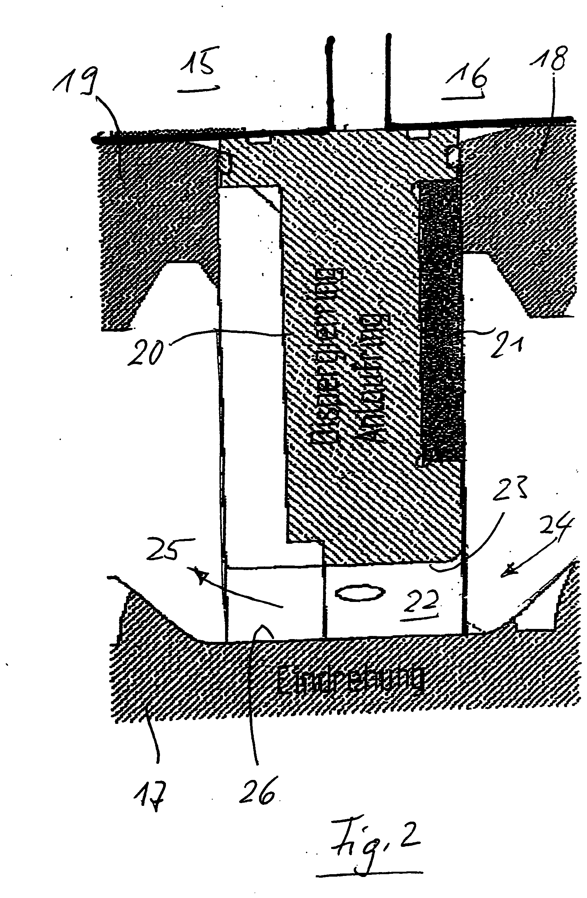

Fig. 2 zeigt eine Einzelheit einer Ringkonstruktion zwischen zwei Modulen. Die Ringkonstruktion ist zwischen benachbarten Gehäuseenden 15 und 16 der Module eingespannt.

In den Gehäuseenden 15 und 16 besitzen innen verzahnte Buchsen 18 und 19. Die Buchsen 18 und 19 sind in den Gehäuseenden 15 und 16 um ein Maß zurückgesetzt, das durch eine Ringkonstruktion 20 ausgefüllt wird.

Die Ringkonstruktion 20 besteht aus zwei Hälften, die vor der Montage des Gehäuses mit dem Ende 15 um die zuvor montierte Zentralspindel 17 zu einem Ring zusammengesetzt werden. Dabei greift die Ringkonstruktion 20 in eine Nut der Zentralspindel 17. Zugleich verbleibt ein Ringspalt zwischen dem äußeren Umfang 23 der Ringkonstruktion 20 und dem Fuß 26 der Nut. Der Ringspalt setzt sich aus einer eintrittsseitigen Verjüngung 24, einem gleichbleibenden Verlauf 22 und einer austrittsseitigen Erweiterung 25 zusammen.

Die Ringkonstruktion 20 bildet zugleich einen Anlaufring und einen Dispergierring. Als Anlaufring bildet die Ringkonstruktion 20 einen Träger für Hartmetall -Ringteile 21. An den Hartmetall-Ringteilen 21 gleiten nicht dargestellte Planetspindeln mit ihrer Stirnfläche während des Extruderbetriebes. Während des Extruderbetriebes laufen die Planetspindeln in dem Hohlraum zwischen den innen verzahnten Buchsen 18 und 19 und der außen verzahnten Zentralspindel 17. Dabei haben die Planetspindeln in dem Hohlraum der innen verzahnten Buchse 18 mit den Hartmetall-Ringteilen 21 Berührung, während die Planetspindeln in dem Hohlraum der innen verzahnten Buchse 19 im Abstand von der Ringkonstruktion 20 umlaufen. Das Einsatzmaterial strömt in der Ansicht der Fig. 2 von rechts nach links. Als Dispergierring hat die Ringkonstruktion an sich die Aufgabe einer Verteilung von Zumischungsanteilen in der Masse. Hier ist die Masse ein Kautschuk oder ein vergleichbares Elastomer, bei dem es auf die Plastifizierung der Masse ankommt, damit erst eine gewünschte Verteilung von Zumischungsanteilen möglich wird.

Die Masse wird durch den dargestellten Ringspalt gedrückt und erfährt dabei eine erhebliche Verformung, die zusammen mit der Verformung aus dem wiederholten Auswalzen der Masse zwischen den Zähnen des Planetwalzenextrudermoduls eine Plastifizierung der aus Kautschuk oder anderen vergleichbaren Elastomeren bewirkt.

## Patentansprüche

1. Verfahren zur Verarbeitung von natürlichem Kautschuk und nicht thermoplastischen Elastomeren im Rahmen einer Kleberherstellung, die vergleichbar zu plastifizieren sind, bevor mit anderen Mischungsbestandteilen eine Vermischung möglich ist,
wobei die Plastifizierung und Vermischung mindestens teilweise mittels einer Extrusionsanlage erfolgt, die aus mindestens einem Planetwalzenextrudabschnitt/Modul (3,4) und einem vorgeschalteten Füllteil (2) zusammen gesetzt ist, wobei der Planetwalzenextrudermodul (3,4) besteht aus
- einer außen verzahnten Zentralspindel,
- auf der Zentralspindel umlaufenden, außen verzahnten Planetspindeln und
- einem innen verzahnten, umgebenden Gehäuse,
wobei die Planetspindeln zugleich mit der Zentralspindelverzahnung und der Gehäuseinnenverzahnung kämmen,
wobei die Verzahnung eine Schrägverzahnung ist, so daß die einzelnen Zähne entsprechend der Steigung der Zähne zur Extruderlängsache wie Schraubengänge an den verzahnten Flächen verlaufen,
wobei das Einsatzmaterial zwischen den Zähnen des Planetwalzenextrudermoduls (3,4) geknetet wird, um eine Plastifizierung des Kautschuks und der vergleichbaren Elastomere zur Einmischung anderer Mischungsbestandteile zu ermöglichen,
**dadurch gekennzeichnet,**
**daß** der natürliche Kautschuk und vergleichbare andere, nicht thermoplastische Elastomere für die Plastifizierung zusätzlich zu dem Kneten im Planetwalzenextruder einer Verformung in mindestens einem Dispergierring (20) unterworfen werden, bis der Kautschuk bzw. die vergleichbar, vor der Einmischung von Mischungsanteilen zu plastifizierenden anderen Elastomere eine Viskosität mit einer Mooneyzahl von kleiner 80, vorzugsweise kleiner 70, noch weiter bevorzugt kleiner 60 und höchst bevorzugt kleiner 50 zeigt, wobei eine Ringkonstruktion (20) als Dispergierring verwendet wird, die bei modularem Aufbau der Extrusionsanlage zwischen
Planetwalzenextrudermodulgehäusen und bis in eine Nut der durch beide Planetwalzenextrudermodule geführten, gemeinsamen Zentralspindel greift und dabei einen Durchtrittsspalt für das Einsatzmaterial offen läßt, der als Ringspalt zwischen dem äußeren Umfang der Ringkonstruktion (20) und dem Fuß (26) der Nut besteht
und
**daß** der Kautschuk und die anderen Elastomere während der Plastifizierung gekühlt werden.

2. Verfahren nach Anspruch 1, **gekennzeichnet durch** die Verwendung einer Ringkonstruktion (20) mit folgender Spaltweite, bezogen auf die Baugröße des Extruders
| Baugröße | Spaltweite | Abweichungen plus/minus |
|---|---|---|
| 50mm | 1,5mm | 1mm/0,5mm |
| 70mm | 1,4mm | 1mm/0,75mm |
| 100mm | 1,6mm | 1mm/0,75mm |
| 150mm | 1,8mm | 1mm/0,75mm |
| 180mm | 2,5mm | 1,5mm/1mm |
| 200mm | 2mm | 2mm/1mm |
| 250mm | 3mm | 1,5mm/1,5mm |
| 280mm | 3,5mm | 2mm/1,5mm |
| 300mm | 3mm | 1,5mm/1,5mm |
| 350mm | 4mm | 1,5mm/1,5mm |
| 400mm | 3,5mm | 2mm/2mm |

3. Verfahren nach Anspruch 1 oder 2, **dadurch gekennzeichnet,**
**daß** die Temperatur von natürlichem Kautschuk bei der Plastifizierung durch Kühlung unter 140 Grad Celsius, vorzugszweie unter 130 Grad Celsius und weiter bevorzugt auf kleiner /gleich 120 Grad Celsius und höchst bevorzug auf 100 bis 120 Grad Celsius gekühlt wird.

4. Verfahren nach Anspruch 3, **dadurch gekennzeichnet, daß** die Temperatur von vergleichbaren, anderen Elastomeren auf einem entsprechenden Abstand unterhalb der Temperatur gehalten wird, bei deren Überschreiten die anderen Elastomere ohne mechanische Verformung und ohne chemischen Plastifizierungsmittel unter Zutritt von Umgebungsluft einen Molekularabbau erfahren.

5. Verfahren nach Anspruch 3 oder 4, **dadurch gekennzeichnet, daß** an der Innenverzahnung des Gehäuses eine Temperatur anliegt, die höchstens gleich der halben Massetemperatur im Extruder ist.

6. Verfahren nach einem der Ansprüche 1 bis 5, **dadurch gekennzeichnet, daß** die Plastifizierung unter Ausschluß von Sauerstoff oder in sauerstoffreduzierter Atmosphäre erfolgt.

7. Verfahren nach Anspruch 6, **dadurch gekennzeichnet, daß** Sauerstoff im Einsatzmaterial spätestens im Füllteil (2) mit einem Schutzgas mindestens teilweise verdrängt wird.

8. Verfahren nach einem der Ansprüche 1 bis 7, **dadurch gekennzeichnet, daß** nicht aufschmelzbare Feststoffe wie Füllstoffe nach dem Plastifieren des Kautschuks bzw. vergleichbarer anderer Elastomere aufgegeben werden.

9. Verfahren nach Anspruch 7, **gekennzeichnet durch** Eintragen weiterer Zumischungsanteil mittels eines Seitenarmextruders (14) nach dem Plastifizieren des Kautschuks bzw. vergleichbarer anderer Elastomere.

10. Verfahren nach Anspruch 8 oder 9, **dadurch gekennzeichnet, daß** das nach der Plastifizierung aufgegebene Einsatzmaterial durch weitere Bearbeitung mit mindestens einem Dispergierring (20) in der Masse dispergiert und homogenisiert werden.

11. Verfahren nach Anspruch 9 oder 10, **gekennzeichnet durch** einen Abstand zwischen dem Füllteil und dem weiteren Dispergierring (20) von mindestens 2D, wobei D der Teilkreisdurchmesser der Innenverzahnung im Extrudergehäuse ist.

12. Verfahren nach einem der Ansprüche 1 bis 11, **gekennzeichnet durch** mindestens eine Entgasung der Mischung im Extruder vor der Plastifizierung.

13. Verfahren nach Anspruch 12, **gekennzeichnet durch** mindestens eine weitere Entgasung nach Eintragen weiterer Mischungsanteile nach der Plastifizierung.

14. Verfahren nach Anspruch 12 oder 13, **gekennzeichnet durch** eine Entgasung mittels leer gefahrenem Seitenarmextruders.

15. Verfahren nach Anspruch 12 oder 13, **gekennzeichnet durch** eine Entgasung mittels Engasungsringen, die jeweils zwischen zwei hintereinander angeordneten Planetwalzenextrudermodulen angeordnet sind.

16. Verfahren nach einem der Ansprüche 1 bis 15, **dadurch gekennzeichnet, daß** mit Dispergierung und Entgasung solange eine Bearbeitung der Mischung im Extruder erfolgt, bis Masseproben bei einer Zusammendrückung auf 1mm oder weniger keine Einschlüsse mehr erkennen lassen.

17. Verfahren nach einem der Ansprüche 1 bis 16, **dadurch gekennzeichnet, daß** der Kautschuk und die vergleichbaren Elastomere mit einem flüssigen Gleitmittel und im Übrigen trocken in den Extruder eingezogen wird, wobei der Gleitmittelanteil an der Masse höchstens 12Gew%, vorzugsweise höchstens 13Gew%, noch weiter bevorzugt höchstens 11 Gew% und höchst bevorzugt höchstens 9Gew% beträgt.

18. Verfahren nach einem der Ansprüche 1 bis 17, **dadurch gekennzeichnet, daß** die Plastifizierung lösungsmittelfrei erfolgt.

## Claims

1. Method for processing natural rubber and non-thermoplastic elastomers in the context of preparing an adhesive, said rubber and elastomers being similarly plasticised before they can be blended with other components of a mixture,
wherein the plasticising and blending results at least partially by means of an extrusion unit that is made up of at least one planetary roller extruder section/module (3, 4) and an upstream filling part (2), wherein the planetary roller extruder module (3, 4) consists of
- an externally toothed central spindle,
- planetary spindles with external toothing that rotate about the central spindle, and
- an internal toothed surrounding housing,
wherein the planetary spindles mesh with both the central spindle toothing and with the internal toothing of the housing,
wherein the toothing is an inclined toothing, such that the individual teeth, in accordance with a pitch of the teeth to the longitudinal axis of the extruder, run like screw threads on the toothed surfaces,
wherein the feed material is kneaded between the teeth of the planetary roller extruder module (3, 4) in order to plastify the rubber and the comparable elastomers to enable other components of the mixture to be blended in,
**characterised in that**,
the natural rubber and comparable, other non-thermoplastic elastomers to be plasticised in addition to the kneading in the planetary roller extruder module, are subjected to a deformation in at least one dispersion ring (20). until the rubber and/or the comparable other elastomers to be plasticised exhibits, prior to the compounding in of components of the mixture, a Mooney viscosity of less than 80, preferably less than 70, still more preferably less than 60 and most preferably less than 50, wherein a ring construction (20) is used as the dispersion ring that in a modular construction of the extrusion unit meshes between the planetary roller extruder module housing as far as into a groove of the common central spindle led through both planetary roller extruder modules, and thereby leaves an open passage gap for the feed material, said gap consists of a circular gap between the outer circumference of the ring construction (20) and the base (26) of the groove
and
that the rubber and the other elastomers are cooled during the plastification.

2. Method according to claim 1, **characterised by** the use of a ring construction (20) having the following gap widths, based on the construction size of the extruder
| Construction size | | Gap width | | Variations |
|---|---|---|---|---|
| | | | | plus/minus |
| 50 | mm | 1.5 | mm | 1 mm/0.5 mm |
| 70 | mm | 1.4 | mm | 1 mm/0.75 mm |
| 100 | mm | 1.6 | mm | 1 mm/0.75 mm |
| 150 | mm | 1.8 | mm | 1 mm/0.75 mm |
| 180 | mm | 2.5 | mm | 1.5 mm/1 mm |
| 200 | mm | 2 | mm | 2 mm/1 mm |
| 250 | mm | 3 | mm | 1.5 mm/1.5 mm |
| 280 | mm | 3.5 | mm | 2 mm/1.5 mm |
| 300 | mm | 3 | mm | 1.5 mm/1.5 mm |
| 350 | mm | 4 | mm | 1.5 mm/1.5 mm |
| 400 | mm | 3.5 | mm | 2 mm/2 mm |

3. Method according to claim 1 or 2, **characterised in that** the temperature of the natural rubber is cooled to below 140° C. during plastification, preferably to below 130° C and more preferably to below/equal to 120° C and most preferably to 100 to 120°C.

4. Method according to claim 3, **characterised in that** the temperature of the comparable, other elastomers is maintained at a suitable interval below a temperature which, if exceeded, would cause the other elastomers, in the absence of mechanical deformation and chemical plasticisers, to suffer molecular degradation from the entry of ambient air.

5. Method according to claim 3 or 4, **characterised in that** the temperature at the internal toothing of the housing is at the most equal to half the melt temperature in the extruder.

6. Method according to one of claims 1 to 5, **characterised in that** the plastification is carried out in the absence of oxygen or in an oxygen-depleted atmosphere.

7. Method according to claim 6, **characterised in that** oxygen in the feedstock is at least partially displaced by an inert gas at the latest in the feed section (2).

8. Method according to one of claims 1 to 7, **characterised in that** non-meltable solids, such as fillers, are added after the natural rubber and/or the comparable other elastomers, have been plasticised,

9. Method according to claim 7, **characterised by** introducing additional blending components by means of a side-arm extruder after the natural rubber and/or the comparable other elastomers have been plasticised.

10. Method according to claim 8 or 9, **characterised in that** after plastifioation added feed material is dispersed and homogenised into the melt by further processing with at least one dispersion ring (20).

11. Method according to claim 9 or 10, **characterised by** a distance of at least 2D between the feed part and the further dispersion ring (20), wherein D is the pitch circle diameter of the internal toothing in the extruder housing.

12. Method according to one of claims 1 to 11, **characterised by** degassing the mixture in the extruder at least once prior to plastification.

13. Method according to claim 12, **characterised by** at least one additional degassing step after additional components have been introduced after the plastification.

14. Method according to claim 12 or 13, **characterised by** a degassing by means of a side-arm extruder that runs empty.

15. Method according to claim 12 or 13, **characterised by** a degassing by means of degassing rings that are each arranged between two consecutively arranged planetary roller extruder modules.

16. Method according to one of claims 1 to 15, **characterised in that** the dispersion and degassing occurs as long as the mixture is processed in the extruder until no inclusions can be detected in compound samples, compressed to 1 mm or less.

17. Method according to one of claims 1 to 16, **characterised in that** the rubber and the comparable elastomers together with a liquid slip agent are fed, and are dry, into the extruder, wherein the slip agent fraction in the compound is at most 12 wt %, preferably at most 13 wt %, still more preferably at most 11 wt % and most preferably at most 9 wt %.

18. Method according to one of claims 1 to 17, **characterised in that** the plastification occurs in the absence of a solvent.

## Revendications

1. Procédé de traitement de caoutchouc naturel et d'élastomères non thermoplastiques pour fabriquer une colle, dans lequel ceux-ci doivent être plastifiés de façonsimilaire avant que l'on puisse effectuer un mélange avec d'autres composants de mélange, la plastification et le mélange étant réalisés au moins partiellement à l'aide d'une installation d'extrusion composée d'au moins une section/unmodule d'extrusion planétaire (3, 4) et d'une partie de remplissage disposée en amont (2), le module d'extrusion planétaire (3, 4) étant composé :
- d'une broche centrale à denture extérieure ;
- de broches planétaires à denture extérieure tournant sur la broche centrale ; et
- d'un boîtier comportant une denture intérieure à sa périphérie,
dans lequel les broches planétaires engrènent simultanément avec la denture de la broche centrale et la denture intérieure du boîtier,
dans lequel la denture est une denture en porte-à-faux, de telle sorte que les différentes dents s'étendent comme des filets de vis sur les surfaces dentées, en fonction du pas des dents par rapport à l'axe de l'extrudeuse, et
dans lequel la charge est malaxée entre les dents du module d'extrusion planétaire (3, 4) de manière à permettre une plastification du caoutchouc et des élastomères similaires en vue d'incorporer d'autres composants de mélange,
**caractérisé en ce que** le caoutchouc naturel et les autres élastomères non thermoplastiques similaires sont soumis, pour la plastification, en plus du malaxage à l'intérieur de l'extrudeuse planétaire, à une déformation dans au moins un anneau de dispersion (20) jusqu'à ce que le caoutchouc ou les autres élastomères similaires à plastifier avant l'incorporation de composants de mélange présentent une viscosité affichant un indice de Mooney inférieur à 80, de préférence inférieur à 70, de préférence encore inférieur à 60 et idéalement inférieur à 50, une structure annulaire (20) étant utilisée comme anneau de dispersion qui, dans le cas d'une l'installation d'extrusion à structure modulaire, est disposée entre les modules d'extrusion à rouleaux planétaires et jusqu'à l'intérieur d'une rainure qui traverse les deuxmodules d'extrusion à rouleaux planétaires, la structure annulaire (20) s'engageant dans la broche centrale commune guidée par les modules d'extrusion à rouleaux planétaires et formant de ce fait une fente de passage pour le matériau d'alimentation, ladite fente de passage étant située entre la périphérie extérieure de la structure annulaire (20) et le pied (26) de la rainure, et le caoutchouc et les autres élastomères étant refroidis au cours de la plastification.

2. Procédé selon la revendication 1, **caractérisé par** l'utilisation d'une structure annulaire (20) qui présente la largeur de fente suivante, par rapport à la taille de l'extrudeuse :
| Taille | Largeur de fente | Ecarts plus / moins |
|---|---|---|
| 50 mm | 1,5 mm | 1 mm / 0,5 mm |
| 70 mm | 1,4 mm | 1 mm / 0,75 mm |
| 100 mm | 1,6 mm | 1 mm / 0,75 mm |
| 150 mm | 1,8 mm | 1 mm / 0,75 mm |
| 180 mm | 2,5 mm | 1,5 mm / 1 mm |
| 200 mm | 2 mm | 2 mm / 1 mm |
| 250 mm | 3 mm | 1,5 mm /1,5 mm |
| 280 mm | 3,5 mm | 2 mm /1,5 mm |
| 300 mm | 3 mm | 1,5 mm / 1,5 mm |
| 350 mm | 4 mm | 1,5 mm /1,5 mm |
| 400 mm | 3,5 mm | 2 mm / 2 mm |

3. Procédé selon la revendication 1 ou 2, **caractérisé en ce que** la température du caoutchouc naturel lors de la plastification est refroidie en dessous de 140 degrés Celsius, de préférence en dessous de 130 degrés Celsius, de préférence encore à une température inférieure ou égale à 120 degrés Celsius et idéalement entre 100 degrés Celsius et 120 degrés Celsius.

4. Procédé selon la revendication 3, **caractérisé en ce que** la température des autres élastomères similaires est maintenue avec un écart correspondant en dessous de la température au-delà de laquelle les autres élastomères subissent une dégradation moléculaire sans déformation mécanique et sans plastifiant chimique, en présence d'air ambiant.

5. Procédé selon la revendication 3 ou 4, **caractérisé en ce que** la denture interne du corps est soumise à une température qui est égale au maximum à la moitié de la température de la masse à l'intérieur de l'extrudeuse.

6. Procédé selon l'une quelconque des revendications 1 à 5, **caractérisé en ce que** la plastification est réalisée en l'absence d'oxygène ou dans une atmosphère à teneur réduite en oxygène.

7. Procédé selon la revendication 6, **caractérisé en ce que** l'oxygène est au moins partiellement chassé dans la matière première au plus tard dans la partie de remplissage (2) avec un gaz protecteur.

8. Procédé selon l'une quelconque des revendications 1 à 7, **caractérisé en ce que** des matières solides non fusibles, telles que des charges, sont introduites après la plastification du caoutchouc ou des autres élastomères similaires.

9. Procédé selon la revendication 7, **caractérisé par** l'introduction d'une quantité supplémentaire de mélange par l'intermédiaire d'une extrudeuse à bras latéral (14) après la plastification du caoutchouc ou des autres élastomères similaires.

10. Procédé selon la revendication 8 ou 9, **caractérisé en ce que** la charge qui est introduite après la plastification est dispersée et homogénéisée dans la masse en exécutant un traitement supplémentaire à l'aide d'au moins un anneau de dispersion (20).

11. Procédé selon la revendication 9 ou 10, **caractérisé par** une distance entre la pièce de remplissage et l'anneau de dispersion supplémentaire (20) d'au moins 2D, dans lequel D correspond au diamètre du cercle primitif de la denture interne dans le corps de l'extrudeuse.

12. Procédé selon l'une quelconque des revendications 1 à 11, **caractérisé par** au moins un dégazage du mélange à l'intérieur de l'extrudeuse avant la plastification.

13. Procédé selon la revendication 12, **caractérisé par** au moins un dégazage supplémentaire après l'introduction d'autres composants de mélange après la plastification.

14. Procédé selon la revendication 12 ou 13, **caractérisé par** un dégazage réaliséà l'aide d'une extrudeuse à bras latéral tournant à vide.

15. Procédé selon la revendication 12 ou 13, **caractérisé par** un dégazage réalisé à l'aide d'anneaux de dégazage disposés chacun entre deux modules d'extrusion à rouleaux planétaires disposés l'un derrière l'autre.

16. Procédé selon l'une quelconque des revendications 1 à 15, **caractérisé en ce que** la dispersion et le dégazage sont accompagnés d'un traitement du mélange à l'intérieur de l'extrudeuse jusqu'à ce que les échantillons de masse ne présentent plus aucune inclusion lors d'une compression inférieure ou égale à 1 mm.

17. Procédé selon l'une quelconque des revendications 1 à 16, **caractérisé en ce que** le caoutchouc et les élastomères similaires sont introduits à l'intérieur de l'extrudeuse en utilisant un lubrifiant liquide et, pour le reste, à sec, la proportion de lubrifiant dans la masse étant égale au maximum à 12 % en poids, de préférence égale au maximum à 13 % en poids, de préférence encore égale au maximum à 11 % en poids etidéalement égale au maximum à 9 % en poids.

18. Procédé selon l'une quelconque des revendications 1 à 17, **caractérisé en ce que** la plastification est réalisée en l'absence de solvant.
